(19) **Europäisches Patentamt**
**European Patent Office**
**Office européen des brevets**

(11) **EP 4 183 129 B1**

(12) **EUROPÄISCHE PATENTSCHRIFT**

(45) Veröffentlichungstag und Bekanntmachung des Hinweises auf die Patenterteilung:
**01.10.2025 Patentblatt 2025/40**

(21) Anmeldenummer: **21718537.0**

(22) Anmeldetag: **08.04.2021**

(51) Internationale Patentklassifikation (IPC):
*H04N 17/00* (2006.01)   *G02B 27/64* (2006.01)
*H04N 23/81* (2023.01)   *H04N 25/11* (2023.01)
*H04N 17/04* (2006.01)

(52) Gemeinsame Patentklassifikation (CPC):
**H04N 17/04; H04N 17/002; H04N 23/81; H04N 25/11;** H04N 23/58

(86) Internationale Anmeldenummer:
**PCT/EP2021/059168**

(87) Internationale Veröffentlichungsnummer:
**WO 2022/012789 (20.01.2022 Gazette 2022/03)**

(54) **VERFAHREN UND VORRICHTUNG ZUR UNTERDRÜCKUNG VON ALIASINGFEHLERN IN BILDERN VON PIXELBASIERTEN ANZEIGEVORRICHTUNGEN UND ZUR BEWERTUNG SOLCHER ANZEIGEVORRICHTUNGEN**

METHOD AND DEVICE FOR REDUCING ALIASING ERRORS IN IMAGES OF PIXEL-BASED DISPLAY DEVICES AND FOR THE EVALUATION OF DISPLAY DEVICES OF THIS TYPE

PROCÉDÉ ET DISPOSITIF POUR RÉDUIRE LES ERREURS DE CRÉNELAGE DANS LES IMAGES DES DISPOSITIFS D'AFFICHAGE À BASE DE PIXELS ET POUR L'ÉVALUATION DES DISPOSITIFS D'AFFICHAGE DE CE TYPE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **17.07.2020 DE 102020208974**

(43) Veröffentlichungstag der Anmeldung:
**24.05.2023 Patentblatt 2023/21**

(73) Patentinhaber: **TechnoTeam Holding GmbH 98693 Ilmenau (DE)**

(72) Erfinder:
• **ROTSCHOLL, Ingo 64289 Darmstadt (DE)**

• **KRÜGER, Udo 99837 Werra-Suhl-Tal OT Wünschensuhl (DE)**
• **SCHMIDT, Franz 98693 Ilmenau (DE)**
• **KEMPE, Heiko-Ulrich Klaus 98693 Ilmenau (DE)**

(74) Vertreter: **Liedtke & Partner Patentanwälte Gerhart-Hauptmann-Straße 10/11 99096 Erfurt (DE)**

(56) Entgegenhaltungen:
**EP-A1- 1 860 492      JP-A- 2005 072 816 US-A1- 2020 005 437**

EP 4 183 129 B1

**Beschreibung**

Die Erfindung betrifft ein Verfahren zur Unterdrückung von Aliasingfehlern in einem Moire-korrigierten Ergebnisbild, das aus mindestens einem Kamerabild gebildet wird, welches von einem durch eine pixelbasierte Anzeigevorrichtung dargestellten Anzeigebild mit matrixartig angeordneten Anzeigepixeln mittels einer Kamera aufgenommen wird.

Die Erfindung betrifft ferner ein Verfahren zur Bewertung der Darstellungsgüte einer pixelbasierten Anzeigevorrichtung anhand mindestens eines derart gebildeten Ergebnisbildes.

Ferner betrifft die Erfindung eine Vorrichtung zur Durchführung solcher Verfahren.

Bei der Aufnahme eines Anzeigebildes, das von einer Anzeigevorrichtung mit matrixartig angeordneten Anzeigepixeln dargestellt wird, mittels einer Kamera, die einen Sensor mit matrixartig angeordneten Sensorpixeln umfasst, können durch Aliasing verursachte Artefakte auftreten, die als Moire-Störung, Moire-Phänomen oder kurz als Moire bezeichnet werden. Derartige Aliasingfehler treten insbesondere dann auf, wenn der Pixelpitch, das heißt: der Abstand zwischen der Mitte eines ersten Pixels zur Mitte eines benachbarten zweiten Pixels, für die Sensorpixel der Kamera näherungsweise gleich, dem an den Abbildungsmaßstab angepassten Pixelpitch für die Anzeigepixel der Anzeigevorrichtung ist.

Der bildseitige Abbildungsmaßstab $\beta'$ ist als das Verhältnis einer Ausdehnung s eines Objektes auf dem Anzeigebild zu der Ausdehnung s' des Abbildes dieses Objektes auf dem Sensor der Kamera definiert:

$$\beta' = \frac{s'}{s}.$$

Es ist bekannt, dass für besondere Messanordnungen, insbesondere für die Abbildung genau eines Anzeigepixels auf genau einen (oder eine feste ganze Zahl von) Sensorpixeln, Moire vermieden werden kann. Aufgrund von Bildverzeichnungen durch das Objektiv der Kamera und die erforderliche genaue Ausrichtung zwischen der Kamera und der Anzeigevorrichtung sind diese Messanordnungen jedoch praktisch schwer zu erreichen.

Ferner ist durch die Dokumente JP2008035241A, US7705883B2 und EP2097783A1 bekannt, dass Moire-Störungen dadurch verringert werden können, dass mindestens ein optisches Element, beispielsweise ein Sensor einer Kamera relativ zu anderen Elementen in der Kamera bewegt wird. Das Dokument US7705883B2 beschreibt eine Vorrichtung und ein Verfahren zur Unterdrückung von Aliasing- oder Moire-Störungen mittels Bildstabilisierungseinheiten von Kameras. In einer beispielhaften Ausführung umfasst das Verfahren die Erfassung einer Kamerabewegung, die Erfassung eines von der Kamera aufgenommenen Bildes und die Bewegung von wenigstens einem optischen Element in der Kamera während der Belichtung des Bildes sowohl zur Stabilisierung des Bildes als auch zur Unterdrückung von Aliasing- oder Moire-Störungen im Bild.

Bei derartigen Verfahren orientiert sich die Bewegung von optischen Elementen relativ zum Sensor im Kamerainneren am Pixelpitch des Sensors und findet auch in der Größenordnung der Nyquistfrequenz der Sensorpixel statt.

Es ist ferner bekannt, dass Moire-Störungen durch eine optische Defokussierung, das heißt: eine leicht unscharfe Abbildung des Anzeigebildes auf den Sensor der Kamera mittels des Kameraobjektivs, gemindert oder vermieden werden können. Damit geht jedoch ein Verlust an effektiver Ortsauflösung des Kamerabildes einher. Aliasingfehler, die als falsch auftretende sehr niedrige Ortsfrequenzen (das heißt: Ortsfrequenzen weit unterhalb der durch den Sensor der Kamera festgelegten Nyquist-Ortsfrequenz) in Erscheinung treten, sind durch eine optische Defokussierung schwer erkennbar und oft nicht oder nicht vollständig vermeidbar. Das Auftreten und die Lage (das heißt: die zugeordnete Ortsfrequenz im Frequenzraum der Kamera) hängt für derartige Aliasingfehler dabei jedoch nicht nur vom Pixelpitch der Sensorpixel ab, sondern auch vom Pixelpitch der Anzeigepixel. Insbesondere hängen Auftreten und Lage derartiger Aliasingfehler vom Verhältnis der Pixelpitches der Anzeigevorrichtung und der Kamera ab.

Typischerweise treten Aliasingfehler besonders schwerwiegend dann auf, wenn das um den Abbildungsmaßstab (die Vergrößerung) der Kamera korrigierte Verhältnis des Pixelpitches der Sensorpixel der Kamera zum Pixelpitch der Anzeigepixel, das als Reproduction Scale (RPS) bezeichnet wird, in einem Bereich von größer als 1 und kleiner als 2 liegt. Prinzipiell sind jedoch auch Aliasingfehler bei einem beliebigen RPS unterhalb und oberhalb von 1, beispielsweise bei einem RPS 3 oder 4 möglich.

Wird der Pixelpitch der Sensorpixel der Kamera mit $D_S$ bezeichnet und der Pixelpitch der Anzeigepixel mit $D_A$ bezeichnet, so ergibt sich das RPS als

$$RPS = \frac{D_s}{\beta' D_A}.$$

Zudem werden Aliasingfehler von der Form und der Apertur der Anzeigepixel beeinflusst. Beispielsweise werden von einer Anzeigevorrichtung mit quadratischen, in vertikaler und horizontaler Richtung gleich beabstandeten Anzeigepixeln andere Moire-Störungen bewirkt als von einer Anzeigevorrichtung mit gleichem Anzeigepixelpitch, jedoch rechteckig geformten Anzeigepixeln. Auch kann, wenn der Anzeigepixelpitch in vertikaler Richtung (Spaltenrichtung) anders gewählt ist als der Anzeigepixelpitch in horizontaler Richtung (Zeilenrichtung), eine andere Moire-Störung bewirkt werden. Es besteht daher ein Bedarf nach einem Korrekturverfahren für Moire-Störungen, das spezifisch auf eine Anzeigevorrichtung anpassbar ist.

Eine der Defokussierung ähnliche Minderung von Moire-Störungen kann auch durch eine glättende Filterung eines Kamerabildes erzielt werden. Tiefpassfilter zur Filterung des Kamerabildes im Ortsraum sind bekannt. Auch eine derartige Glättung bewirkt jedoch einen Verlust an effektiver Ortsauflösung und kann sehr niedrige Aliasing-Ortsfrequenzen nicht sicher unterdrücken.

Ferner ist es möglich, Kamerabilder, beispielsweise durch eine zweidimensionale diskrete Fouriertransformation, in einen Frequenzraum zu transformieren und in dem Frequenzraum durch Aliasing erzeugte fehlerhafte Frequenzanteile zu eliminieren oder zu unterdrücken. Aus einer derart bereinigten Frequenzraumdarstellung kann durch Rücktransformation in den Ortsraum ein bereinigtes Bild erzeugt werden, in dem Moire-Störungen unterdrückt sind. Mit diesem Verfahren können jedoch fehlerhafte (durch Aliasing bewirkte) Frequenzanteile, die der Frequenz und der Leistung nach nicht von möglichen tatsächlich vorhandenen Ortsfrequenzen unterscheidbar sind, nicht eliminiert werden. Beispielsweise können sehr niedrige Aliasing-Ortsfrequenzen nicht oder nur unvollständig unterschieden werden von korrekt aufgenommenen Ortsfrequenzen, die durch eine örtlich ungleichmäßige Leuchtdichte eines (homogen angesteuerten) Displays verursacht werden.

Aus dem Dokument JP 3755375 B2 ist ein Verfahren zur Unterdrückung von Moire-Störungen in Kamerabildern bekannt, die von einem elektronischen Display aufgenommen werden. Dabei wird eine Mehrzahl von Kamerabildern mittels einer Kamera aufgenommen. Zwischen der Aufnahme der einzelnen Kamerabilder wird die Kamera gegenüber dem Display relativ zu der Startposition, in welcher ein erstes Kamerabild aufgenommen wird, in vertikaler Richtung (das heißt: entlang der Spalten der matrixartig angeordneten Displaypixel) und/oder in horizontaler Richtung (das heißt: entlang der Zeilen der matrixartig angeordneten Displaypixel) versetzt, wobei der Versatz in jeder Richtung jeweils die Hälfte des Pixelpitches des elektronischen Displays beträgt.

Aus den derart aufgenommenen einzelnen Kamerabildern wird durch Mittelung ein Moire-korrigiertes Ergebnisbild generiert.

Das Dokument US 6,831,995 B1 offenbart darüber hinaus, dass eine Mehrzahl von $n^2$ Kamerabildern aufgenommen wird, wobei jedes Kamerabild an einer für die Aufnahmedauer eines einzelnen Kamerabildes jeweils festen Aufnahmepositionen aufgenommen wird. Die Aufnahmepositionen sind gitterartig in einem Quadrat oder Rechteck versetzt angeordnet, dessen vertikale / horizontale Ausdehnung gleich dem vertikalen / horizontalen Anzeigepixelpitch ist. Das Dokument US 6,831,995 B1 schlägt vor, aus der Mehrzahl dieser Kamerabilder ein n-fach überabgetastetes Kompositionsbild zu generieren und darin Moire-Störungen durch gleitende Mittelung zu verringern oder zu beseitigen.

Das Dokument JP 2014 174803 A beschreibt ein Verfahren zur Entfernung von Moire-Störungen in Bildern, bei dem eine zweidimensionale Fouriertransformation ausgeführt und Frequenzkomponenten, die niedrigen Ortsfrequenzen zugeordnet sind, extrahiert werden. Weitere Frequenzkomponenten, die vergleichsweise höheren Ortsfrequenzen zugeordnet sind, werden entfernt. Die derart veränderte Fouriertransformierte wird in den Ortsbereich zurücktransformiert.

Das Dokument WO 2018/146765 A1 beschreibt ein Verfahren zur Moire-Unterdrückung ohne Beeinträchtigung der Bildauflösung. Aus einem ersten, defokussierten Bild werden im Fourierbereich Frequenzkomponenten entnommen, die niedrigen Ortsfrequenzen zugeordnet sind. Aus einem zweiten, nicht defokussierten Bild werden im Fourierbereich Frequenzkomponenten entnommen, die hohen Ortsfrequenzen zugeordnet sind. Die dem ersten und dem zweiten Bild entnommenen Frequenzkomponenten werden zusammengefasst und in den Ortsbereich zurücktransformiert.

Das Dokument JP 2005072816 A beschreibt ein Verfahren zur Eliminierung von Moiré für ein Flachbildschirm-Prüfgerät Die Belichtung einer CCD-Kamera an einer Startposition wird gestartet, um die Erfassung eines Anzeigebildes auf einem Bildschirm auszulösen. Ein XZ-Tisch wird gleichzeitig in horizontaler und vertikaler Richtung angetrieben, um die CCD-Kamera schräg entlang des Bildschirms zu bewegen. Wenn die CCD-Kamera eine Endposition erreicht, wird die Belichtung geschlossen und der Antrieb des XZ-Tisches wird gestoppt, um die Erfassung des Anzeigebildes zu beenden. Während die CCD-Kamera schräg bewegt wird, nimmt die CCD-Kamera das Anzeigebild auf dem Bildschirm auf. Der Bewegungsbetrag der CCD-Kamera durch den XZ-Tisch hängt von der Anzahl der Punkte ab, die die Auflösung des Flachbildschirms bestimmen, und die CCD-Kamera wird gleichzeitig in einer lateralen Richtung um laterale Punktabstände und in einer longitudinalen Richtung um longitudinale Punktabstände bewegt.

Das Dokument EP 1860492 A1 beschreibt ein Verfahren zur optischen Vorfilterung bei einem Bildaufnahmegerät mit einem Objektiv, das ein erfasstes Bild auf einen oder mehrere digitale optoelektronische Bildsensoren mit lichtempfindlichen Pixeln projiziert. Wenigstens ein optoelektronischer Bildsensor und das auf ihn projizierte Abbild werden während der Belichtung in der Pixelebene relativ zueinander bewegt, wobei der Bewegungsvektor dieser Relativbewegung vorbestimmte Aufenthaltsorte mit einer jeweils vorbestimmten Aufenthaltsdauer einnimmt. Damit können Aliasingartefakte bei Aufnahmen mit digitalen Bildsensoren vermindert werden.

Das Dokument US 2020005437 A1 beschreibt ein Bildverarbeitungsverfahren umfassend: das Erfassen eines fokussierten Anzeigebildes eines Displays mit einer Kamera; das Erzeugen eines ersten Bildes durch Anwenden eines Hochpassfilters auf das erfasste Bild, um eine räumliche Frequenzkomponente zu entfernen oder zu reduzieren, die einem Moiré Artefakt entspricht, der in dem erfassten Bild erschienen ist; das Erfassen eines defokussierten Anzeigebildes mit der Kamera; Erzeugen eines zweiten Bildes durch Anwenden eines Korrekturfilters auf das aufgenommene Bild, um die Abschwächung der Raumfrequenzkomponente des aufgenommenen Bildes mit dem Korrekturfilter zu korrigieren, und Anwenden eines Tiefpassfilters auf das korrigierte aufgenommene Bild; und Erzeugen eines dritten Bildes, in dem der Moiré Artefakt entfernt oder reduziert wurde, durch Zusammensetzen des ersten Bildes und des zweiten Bildes. Die Summe des Transmissionsgrads des Hochpassfilters und des Transmissionsgrads des Tiefpassfilters ist bei jeder Raumfrequenz ein konstanter Wert.

Der Erfindung liegt die Aufgabe zu Grunde, ein verbessertes Verfahren zur Unterdrückung von Aliasingfehlern in einem aus mindestens einem Kamerabild gebildeten Moire-korrigierten Ergebnisbild anzugeben.

Diese Aufgabe wird erfindungsgemäß durch ein Verfahren mit den Merkmalen des Anspruchs 1 gelöst.

Der Erfindung liegt ferner die Aufgabe zu Grunde, ein verbessertes Verfahren zur Bewertung der Darstellungsgüte einer pixelbasierten Anzeigevorrichtung anzugeben.

Diese Aufgabe wird erfindungsgemäß durch ein Verfahren mit den Merkmalen des Anspruchs 11 gelöst.

Der Erfindung liegt ferner die Aufgabe zu Grunde, eine Vorrichtung zur Durchführung eines dieser Verfahren anzugeben.

Diese Aufgabe wird erfindungsgemäß durch eine Vorrichtung mit den Merkmalen des Anspruchs 14 gelöst.

Vorteilhafte Ausgestaltungen der Erfindung sind Gegenstand der Unteransprüche.

Bei einem Verfahren zur Unterdrückung von Aliasingfehlern wird ein Moire-korrigiertes Ergebnisbild aus mindestens einem Kamerabild gebildet. Das mindestens eine Kamerabild wird mittels einer Kamera, die eine Abbildungsoptik und eine Sensorfläche mit Sensorpixeln umfasst, als Abbildung eines Anzeigebildes aufgenommen, welches von einer Anzeigevorrichtung mit matrixartig angeordneten Anzeigepixeln auf die Sensorfläche abgebildet wird. Die Anzeigepixel sind in einem Anzeigepixelpitch beabstandet. Der Anzeigepixelpitch ist der Abstand von der Mitte eines Anzeigepixels zur Mitte eines jeweils nächstgelegenen anderen Anzeigepixels.

Erfindungsgemäß wird die Kamera während der Aufnahme mindestens eines Kamerabildes relativ zur Anzeigevorrichtung entlang mindestens eines Versatzpfades bewegt.

Wenn die Kamera gegenüber der Anzeigevorrichtung während einer Kamerabildaufnahme im Zeitraum $0 \leq t \leq T$ bewegt wird, so verändert sich im Allgemeinen die Projektion eines gedachten oder wirklichen Punktes des Anzeigebildes, beispielsweise des Mittelpunktes eines näherungsweise mittig angeordneten Anzeigepixels, auf die Sensorfläche der Kamera.

Die zeitabhängige Ortskurve der Bewegung der Kamera:

$$x(t) = x_0 + \delta_x(t)$$

$$y(t) = y_o + \delta_y(t)$$

wird als Versatzpfad bezeichnet, wobei $x_0$, $y_0$ die Koordinaten der Kamera in x-Richtung und y-Richtung zum Beginn der Aufnahme des Kamerabildes bezeichnen und $\delta_x(t)$, $\delta_y(t)$ die demgegenüber während der Belichtung erfolgte Verschiebung in x-Richtung und y-Richtung.

Die Koordinaten x, y werden in Bezug auf ein ortsfest zur Anzeigevorrichtung gewähltes Koordinatensystem angegeben.

Die Länge eines solchen Versatzpfades

$$L = \int_{t=0}^{T} \sqrt{\dot{x}(t)^2 + \dot{y}(t)^2}\, dt$$

wird als Versatz bezeichnet.

Bezogen auf ein von der Kamera und der Anzeigevorrichtung unabhängiges Weltkoordinatensystem kann der Versatz durch Bewegung der Kamera und/oder durch Bewegung der Anzeigevorrichtung relativ zum Weltkoordinatensystem erzielt werden. Mit anderen Worten: das auf die Anzeigevorrichtung bezogene Koordinatensystem für x, y kann gegenüber dem Weltkoordinatensystem ortsfest oder auch beweglich sein, für die Beschreibung des Versatzpfades kommt es nur auf die Relativbewegung zwischen der Kamera und der Anzeigevorrichtung an. Im Folgenden wird mit "Bewegung der Kamera" daher stets eine auf die Anzeigevorrichtung bezogene Relativbewegung bezeichnet, die auch teilweise oder vollständig durch eine Bewegung der Anzeigevorrichtung relativ zu einem Weltkoordinatensystem erzielt werden kann.

Vorzugsweise wird bei der Bewegung der Kamera deren Ausrichtung relativ zur Anzeigevorrichtung näherungsweise beibehalten. Dem Fachmann ist aber bekannt, dass ein Schwenken der Kamera oder der Anzeigevorrichtung um sehr kleine Schwenkwinkel $\alpha$, für die die Näherung $\sin(\alpha) \approx \alpha$ gilt, praktisch einer Translation gleichkommt. Daher ist es auch möglich, bei ausreichend großem Abstand zwischen Kamera und Anzeigevorrichtung einen Versatz durch Schwenken der Kamera oder der Anzeigevorrichtung herbeizuführen.

Die Anzeigevorrichtung erzeugt abhängig von der Apertur der Anzeigepixel und der Abbildungsoptik der Kamera in der Ebene der Sensorfläche eine zweidimensionale Leuchtdichteverteilung $l(x', y')$, wobei $x', y'$ zwei zueinander orthogonale Koordinaten in der Ebene der Sensorfläche beschreiben . Diese Leuchtdichteverteilung wird entsprechend der Apertur der Sensorpixel nach einer (über der Ebene der Sensorfläche) zweidimensionalen Empfindlichkeitsverteilungsfunktion $s(x',y')$ der Sensorpixel aufgenommen.

Bei zueinander fest angeordneter Kamera und Anzeigevorrichtung kann die zweidimensionale Grauwertverteilungsfunktion $g(x',y')$ eines Kamerabildes über den kontinuierlichen Ortskoordinaten $x',y'$ in der Sensorfläche somit durch punktweise Multiplikation der Leuchtdichteverteilung $l(x',y')$ mit der Empfindlichkeitsverteilungsfunktion $s(x',y')$, angegeben werden:

$$g(x', y') = l(x', y') \cdot s(x', y').$$

Diese Grauwertverteilungsfunktion wird über die Sensorfläche integriert und liefert den Signalwert des Sensorpixels. Dies kann als Faltung der Leuchtdichteverteilung mit der Pixelempfindlichkeit und anschließende Abtastung an den Stellen der Sensorpixel beschrieben werden. Diese Abtastung führt bekanntermaßen zu Moire-Störungen, insbesondere dann, wenn die Pixelpitches der Anzeigepixel und der Sensorpixel gleich oder ähnlich groß sind.

Durch die Bewegung der Kamera während der Belichtung eines einzelnen Kamerabildes in der Zeit $0 \le t \le T$ wird ein einzelner Punkt des Anzeigebildes auf eine Mehrzahl von Punkten der Sensorfläche abgebildet. Die Gesamtheit dieser Punkte ist als bewegungsinduzierte Punktantwort (point spread function, PSF) $h(x', y')$ anzusehen.

Beispielsweise ergibt sich für eine Kamerabewegung (Translation oder Schwenkung um einen sehr kleinen Schwenkwinkel), die in einer gleichförmigen linearen Bewegung eines solchen abgebildeten Punktes um $\Delta_x$ in $x'$-Richtung resultiert, die Punktantwort

$$h(x', y') = \begin{cases} \dfrac{1}{T} \ \text{für } x'_0 \le x' \le x'_0 + \Delta_x, y' = y'_0 \\ \qquad\qquad 0 \ \text{sonst} \end{cases}$$

Entsprechend entsteht eine korrigierte Grauwertverteilungsfunktion $g'(x',y')$ in der Sensorfläche der Kamera durch Faltung mit der bewegungsinduzierten PSF

$$g'(x', y') = \int_{-\infty}^{\infty} \int_{-\infty}^{\infty} g(x' - \xi, y' - \nu) \cdot h(\xi, \nu)\, d\xi\, d\nu$$

Die Fouriertransformierte der bewegungsinduzierten PSF $H(\omega_{x'},\omega_{y'})$ weist im Allgemeinen Tiefpasscharakter auf, ist jedoch vom Ortsverlauf sowie der Länge des Versatzpfades abhängig. Beispielsweise werden bei einem Versatz nur in (horizontaler) x-Richtung auch lediglich hohe horizontale Ortsfrequenzen gedämpft, hohe vertikale Ortsfrequenzen dagegen nicht.

Überraschenderweise hat sich herausgestellt, dass durch die relative Bewegung der Kamera zur Anzeigevorrichtung (Versatzpfad) und eine dadurch bewirkte Bewegung des Kamerabildes relativ zum Anzeigebild Moire-Störungen reduziert oder sogar eliminiert werden, ohne dass der aus dem Stand der Technik bekannte Nachteil einer erheblich verminderten effektiven Ortsauflösung im Moire-korrigierten Ergebnisbild eintritt.

Als besonders vorteilhaft hat sich herausgestellt, dass ein Versatzpfad so gewählt wird, dass der Versatz, das heißt: die Länge der Ortskurve, entlang der die Kamera relativ zur Anzeigevorrichtung bewegt wird, in der Größenordnung des Anzeigepixelpitches liegt. Dadurch ist es möglich, ein Anzeigebild sehr detailliert, insbesondere auf Anzeigepixel genau aufgelöst, zu erfassen und zu bewerten.

Zudem werden nach dem erfindungsgemäßen Verfahren niedrige Ortsfrequenzen im Anzeigebild, die beispielsweise auf eine nicht homogene Helligkeitsverteilung über der Anzeigevorrichtung zurückzuführen sind, beibehalten. Dagegen werden niedrige Ortsfrequenzen, die fehlerhaft durch Aliasing entstehen, mit dem Verfahren reduziert oder eliminiert.

Ein weiterer Vorteil des erfindungsgemäßen Verfahrens besteht darin, dass es ohne innerhalb der Kamera bewegte Elemente, beispielsweise relativ zum Sensorchip bewegte optische Elemente, durchführbar ist. Dadurch wird die Kalibrierung von Kameras, insbesondere von Leuchtdichtemesskameras, erleichtert.

Ein weiterer Vorteil des erfindungsgemäßen Verfahrens besteht darin, dass eine der Unterdrückung von Moire-Störungen dienliche Bewegung der Kamera auch ohne Berücksichtigung des Abbildungsmaßstabes $\beta'$ und ohne Berücksichtigung des Sensorpixelpitches nur anhand des Anzeigepixelpitches bestimmt werden kann. Damit sollen Ausführungsformen, in welchen der Abbildungsmaßstab $\beta'$ und/oder der Sensorpixelpitch zusätzlich, das heißt: für eine weiter verbesserte Unterdrückung von Moire-Störungen, herangezogen werden, jedoch nicht ausgeschlossen werden.

Mit dem erfindungsgemäßen Verfahren ist eine Moire-Korrektur (oder Unterdrückung von Aliasingfehlern) mit besonders wenigen einzeln aufgenommenen Kamerabildern möglich. Bevorzugt wird eine Moire-Korrektur anhand eines einzigen aufgenommenen Kamerabildes vorgenommen. Dies ist besonders vorteilhaft, wenn wegen einer geringen Helligkeit des Anzeigebildes eine lange Belichtungszeit für die Aufnahme eines Kamerabildes gewählt werden muss, da sich dann mit einer geringen Anzahl von aufgenommenen Kamerabildern eine besonders kurze Messzeit erzielen lässt.

Bevorzugt wird der Versatzpfad so gewählt, dass der Versatz höchstens das Fünffache des Anzeigepixelpitches beträgt. Es hat sich herausgestellt, dass ein darüber hinausgehender Versatz nicht oder nur geringfügig zur Korrektur der Moire-Störungen beiträgt, jedoch die Ortsauflösung des Kamerabildes, und somit auch des daraus gebildeten Moire-korrigierten Ergebnisbildes, beeinträchtigt.

Bei einer Ausführungsform der Erfindung wird das Moire-korrigierte Ergebnisbild aus einer Mehrzahl von Kamerabildern gebildet. Durch Bewegung der Kamera wird für jedes Kamerabild, ausgehend von einem jeweiligen Startpunkt, ein Versatzpfad erzeugt. Zwischen dem ersten und mindestens einem weiteren Kamerabild wird die Kamera gegenüber der Anzeigevorrichtung versetzt, so dass sich der dem mindestens einen weiteren Kamerabild zugeordnete Startpunkt von dem Startpunkt, der dem ersten Kamerabild zugeordnet ist, unterscheidet.

Die einzelnen Kamerabilder werden überlagert, das heißt: pixelweise aufsummiert oder gemittelt. Bei einer Mittelung können unterschiedliche Kamerabilder unterschiedlich gewichtet werden. Es ist möglich, dass jedes der Kamerabilder aufgenommen wird, während die Kamera gegenüber der Anzeigevorrichtung um mindestens einen Versatz versetzt wird. Es ist auch möglich, dass mindestens eines aus der Mehrzahl der Kamerabilder aufgenommen wird, ohne dass während dessen Aufnahme (Belichtung) die Kamera gegenüber der Anzeigevorrichtung bewegt wird.

Die Bildung eines Moire-korrigierten Ergebnisbildes aus einer Mehrzahl von Kamerabildern bietet den Vorteil, dass das Moire-korrigierte Ergebnisbild eine besonders hohe Ortsauflösung aufweist, da die auf jeweils ein einzelnes Kamerabild bezogenen Versatzpfade einen kürzere Länge (einen geringeren Versatz) aufweisen können.

Darüber hinaus ist ein Vorteil dieser Ausführungsform, dass auch bei einer, bedingt durch die Helligkeit der Anzeigevorrichtung und die Empfindlichkeit der Kamera, sehr kurz zu wählenden Belichtungszeit, eine große Anzahl von unterschiedlichen Versatzwegen angefahren werden kann. Dadurch kann eine bessere Moire-Unterdrückung erzielt werden.

Bei einer Ausführungsform der Erfindung werden ein erstes, ein zweites sowie mindestens ein drittes oder weiteres Kamerabild aufgenommen.

Das erste und das zweite Kamerabild werden als Abbildungen von strukturgleichen Anzeigebildern aufgenommen, welche von derselben Anzeigevorrichtung dargestellt werden. Das dritte Kamerabild kann von einer baugleichen, aber anderen Anzeigevorrichtung aufgenommen werden als das erste und zweite Kamerabild.

Als strukturgleich sind hier und im Folgenden Anzeigebilder zu verstehen, die sich in ihren Frequenzgängen nicht oder nur unwesentlich voneinander unterscheiden. Anzeigebilder mit gleicher Belegung der Anzeigepixel sind strukturgleich.

Jedoch beeinträchtigen auch kleine Variationen von Grauwerten (Helligkeitswerten) in einzelnen Anzeigepixeln, beispielsweise eine Grauwertänderung bei einem Anteil von höchstens einem Prozent aller Anzeigepixel, die Verwendbarkeit des ersten und des zweiten Kamerabildes für diese Ausführungsform des Verfahrens nicht. Derart veränderte Anzeigebilder sollen auch als strukturgleich verstanden werden.

Ebenfalls beeinträchtigt das homogene geringfügige Verändern aller oder sehr vieler Anzeigepixel zwischen der Aufnahme des ersten und des zweiten Kamerabildes die Verwendbarkeit des ersten und des zweiten Kamerabildes für diese Ausführungsform des Verfahrens nicht, beispielsweise die Addition oder Subtraktion eines im Vergleich zum mittleren Grauwert beider Anzeigebilder sehr geringen Wertes und/oder die Skalierung aller Grauwerte mit einem Faktor nahe Eins. Auch derart veränderte Anzeigebilder sollen als strukturgleich verstanden werden.

Verallgemeinert gesprochen, sollen zwei Anzeigebilder dann als strukturgleich angesehen werden, wenn der dadurch bewirkte Unterschied in den zugeordneten Kamerabildern deutlich geringer ist als die in den Kamerabildern jeweils aufgeprägte Moire-Störung. Zur Bestimmung eines Unterschieds zwischen Kamerabildern (bewirkt durch ein verändertes Anzeigebild oder durch eine aufgeprägte Moire-Störung) können beispielsweise eine mittlere quadratische Abweichung und/oder eine maximale Abweichung sowohl im Pixelraum als auch im Ortsfrequenzraum herangezogen werden. Als gering sollen insbesondere relative Unterschiede von 5% oder weniger verstanden werden.

Während der Aufnahme des ersten Kamerabildes sowie während der Aufnahme des mindestens einen dritten oder weiteren Kamerabildes wird die Kamera gegenüber der Anzeigevorrichtung nicht oder nur geringfügig bewegt. Unter "geringfügig bewegt" soll hier und im Folgenden eine Bewegung der Kamera verstanden werden, die zu einer Lageveränderung führt, die deutlich geringer als der Anzeigepixelpitch ist, bevorzugt weniger als ein Drittel des Anzeigepixelpitches. Insbesondere soll unter "geringfügig bewegt" eine Bewegung verstanden werden, die nicht gezielt ausgelöst wird, sondern nur in Folge beispielsweise unvermeidbarer Erschütterungen zu einer Relativbewegung zwischen Kamera und Anzeigevorrichtung führt.

Während der Aufnahme des zweiten Kamerabildes wird die Kamera relativ zur Anzeigevorrichtung entlang mindestens eines Versatzpfades bewegt, wie dies anhand der vorab beschriebenen Ausführungsformen bereits erläutert wurde.

Für das erste und das zweite Kamerabild werden die zweidimensionalen Fouriertransformierten ermittelt und deren Betragsverlauf (Amplitudenspektrum) als erster beziehungsweise zweiter Betragsverlauf bestimmt. Bevorzugt werden die Fouriertransformierten als diskrete Fouriertransformierte für diskrete (vertikale und horizontale) Ortsfrequenzen oder Wellenzahlen bestimmt.

Aus dem ersten und dem zweiten Betragsverlauf wird ein Amplitudengang eines Versatzfilters ermittelt. Ein Versatzfilter ist ein gedachtes lineares, zeitinvariantes System, das am Ausgang das zweite Kamerabild (welches mit Versatz aufgenommen wurde) bereitstellt oder approximiert, wenn am Eingang das erste Kamerabild (welches ohne Versatz aufgenommen wurde) präsentiert wird. Der Amplitudengang gibt den Betragsverlauf der Übertragungsfunktion eines solchen Versatzfilters an.

Für das mindestens eine dritte oder weitere Kamerabild wird jeweils die Fouriertransformierte bestimmt und jeweils mit dem Amplitudengang des Versatzfilters multipliziert. Daraus, das heißt: aus dem Produkt der Fouriertransformierten des mindestens einen dritten oder weiteren Kamerabilds und dem Amplitudengang, wird durch inverse Fouriertransformation (Fourier-Rücktransformation) jeweils ein Moire-korrigiertes Ergebnisbild bestimmt.

Durch Anwendung des Amplitudengangs, der aus dem ersten und zweiten Kamerabild bestimmt wurde und der die Wirkung der Versatzbewegung auf das zweite Kamerabild näherungsweise (unter Beschränkung auf ein lineares, zeitinvariantes System) beschreibt, ist bei dem dritten oder weiteren Kamerabild eine Unterdrückung von Moire-Störungen in ähnlicher Weise möglich wie bei dem zweiten Kamerabild. Ein Vorteil dieser Ausführungsform besteht darin, dass die Kamera (relativ zur Anzeigevorrichtung) bei der Aufnahme des dritten oder weiteren Kamerabildes nicht bewegt werden muss.

Dadurch ist eine Moire-Korrektur auch bei Kamerabildern mit sehr kurzen Belichtungszeiten (beispielsweise bei der Aufnahme von sehr lichtstarken Anzeigevorrichtungen) möglich. Außerdem kann eine mechanische Belastung, der die Kamera und/oder die Anzeigevorrichtung bei einer Bewegung entlang des Versatzpfades ausgesetzt sein kann, vermieden werden.

Bei einer Weiterbildung dieser Ausführungsform werden das erste und das zweite Kamerabild von einer ersten Anzeigevorrichtung erfasst und das dritte oder weitere Kamerabild von einer zweiten oder weiteren Anzeigevorrichtung erfasst, welche zur ersten Anzeigevorrichtung baugleich ausgebildet und gegenüber der Kamera in einer gleichen oder ähnlichen Aufnahmeanordnung angeordnet ist oder sind.

Unter einer ähnlichen Aufnahmeanordnung ist hierbei die Platzierung einer zweiten oder weiteren baugleichen Anzeigevorrichtung innerhalb desselben Vermessungsaufbaus mit geometrischen Abweichungen zu verstehen, wie sie bei der Platzierung von Messobjekten und/oder Messvorrichtungen im Rahmen einer Produktions- oder Qualitätskontrolle solcher Anzeigevorrichtungen üblich sind.

Die Anwendung eines basierend auf einer ersten Anzeigevorrichtung abgeleiteten Amplitudenganges auf mindestens eine weitere baugleiche Anzeigevorrichtung innerhalb desselben Vermessungsaufbaus hat den Vorteil, dass für die Anwendung der Moire-Korrektur nur jeweils ein Kamerabild mit keiner oder geringfügiger Bewegung aufgenommen werden muss, was sowohl die mechanische Belastungen als auch die benötigte Messzeit weiter reduziert. Insbesondere ist es dadurch möglich, einen Vermessungsaufbau anhand einer ersten Anzeigevorrichtung einmalig zu konfigurieren und danach unverändert für eine Vielzahl von Anzeigevorrichtungen, beispielsweise in einem kontinuierlichen Prozess der Produktions- und Qualitätskontrolle, anzuwenden.

In einer Ausführungsform wird der Amplitudengang eines Versatzfilters als Quotient des zweiten Betragsverlaufs (welcher aus der Fouriertransformierten des zweiten Kamerabildes bestimmt wurde) bezogen auf den ersten Betragsverlauf (welcher aus der Fouriertransformierten des ersten Kamerabildes bestimmt wurde) ermittelt. Auf diese Weise kann der Amplitudengang eines Versatzfilters besonders einfach bestimmt werden.

In einer Weiterbildung einer solchen Ausführungsform kann ein Versatzfilter dadurch gebildet werden, dass der Quotient des zweiten zum ersten Betragsverlauf einer nichtlinearen Transformation, beispielsweise einer Binarisierung, unterzogen wird.

In einer solchen Ausführungsform wird der Amplitudengang eines Versatzfilters binarisiert, indem mittels eines lokalen Segmentierungsalgorithmus basierend auf dem Quotienten des zweiten Betragsverlaufs (welcher aus der Fouriertransformierten des zweiten Kamerabildes bestimmt wurde) bezogen auf den ersten Betragsverlauf (welcher aus der Fouriertransformierten des ersten Kamerabildes bestimmt wurde) jedem Paar einer vertikalen und einer horizontalen Ortsfrequenz der Wert 0 zugeordnet wird, wenn der Quotient der Betragsverläufe unterhalb eines vorbestimmten Schwellwerts liegt, oder der Wert 1 zugeordnet, wenn der Quotient der Betragsverläufe oberhalb dieses vorbestimmten Schwellwerts liegt oder gleich diesem vorbestimmten Schwellwert ist.

Auf diese Weise kann ein besonders robuster Versatzfilter ermittelt werden. Ferner kann die Robustheit solcher als Binärfilter ausgeprägter Amplitudengänge durch die Anwendung weiterer Bildoperationen wie z.B. morphologischer Operatoren weiter gesteigert werden.

Ein solches Versatzfilter kann auch dadurch ermittelt werden, dass - unter Beibehaltung der übrigen, bereits beschriebenen Verfahrensschritte - anstelle der Kamera bei der Aufnahme des zweiten Kamerabildes (welches von der ersten Anzeigevorrichtung aufgenommen wird) nur der Sensor mit den matrixartig angeordneten Sensorpixeln relativ zur Anzeigevorrichtung bewegt wird, während die Kamera relativ zur aufgenommenen Anzeigevorrichtung ruht. Mit anderen Worten: innerhalb der Kamera wird, beispielsweise durch eine Piezoaktorik, während der Aufnahme des zweiten Kamerabildes der Sensor relativ zum Kameragehäuse bewegt. Dadurch kann die mechanische Belastung der Kamera vermindert werden. Da Kameras verfügbar sind, in die eine geeignete Aktorik zum Bewegen des Sensors bereits integriert ist, kann dadurch auch der gerätetechnische Aufwand für die Bestimmung eines Versatzfilters verringert werden.

Bei einer Ausführungsform des Verfahrens wird in einem Teach-In Schritt vor der Aufnahme des mindestens einen Kamerabildes zur Gewinnung des Moire-korrigierten Ergebnisbildes mindestens ein bevorzugter Versatzpfad passend zu einer Anzeigevorrichtung und zu einer Kamera derart ermittelt, dass ein Moire-Störungsmaß unterhalb eines vorbestimmten Moire-Schwellwertes liegt und/oder minimiert wird.

Die Bestimmung des mindestens einen bevorzugten Versatzpfades kann erfolgen, indem dessen Parameter als Parameter eines diskreten Optimierungsproblems gewählt werden, wobei als zu minimierendes Optimierungskriterium das Moire-Störungsmaß gewählt wird, für das anhand einer Stichprobe von Moire-korrigierten Ergebnisbildern eine statistische Schätzung ermittelt wird.

Dabei werden die dieser Schätzung zugrunde liegenden Moire-korrigierten Ergebnisbildern jeweils mit dem erfindungsgemäßen Verfahren aus Kamerabildern gebildet. Mit anderen Worten: für jeden untersuchten Versatzpfad wird in dem Teach-In Schritt jeweils als Gütekriterium das Moire-Störungsmaß ermittelt.

Das Verfahren kann abgebrochen werden, wenn mindestens ein bevorzugter Versatzpfad gefunden ist, für den das Gütekriterium (das zugeordnete Moire-Störungsmaß) den vorbestimmten Moire-Schwellwert unterschreitet. Alternativ wird das Verfahren abgebrochen, wenn in einer vorbestimmten Anzahl von Optimierungsschritten keine oder keine ausreichende Verbesserung des Gütekriteriums erzielt werden konnte. Verfahren zur Lösung derartiger diskreter Optimierungsprobleme sind aus dem Stand der Technik bekannt.

Ein bevorzugter Versatzpfad kann beispielsweise dadurch bestimmt werden, dass für eine Vielzahl von linearen (geraden) Bewegungen der Kamera relativ zur Anzeigevorrichtung nach Richtung und Länge (Versatz) variiert werden.

In analoger Weise kann ein bevorzugter Versatzpfad als Polygonzug aus einer Mehrzahl von linearen (geraden) Bewegungen bestimmt werden, die jeweils nach Richtung und Länge (Versatz) variiert werden.

Es ist auch möglich, eine Mehrzahl von bevorzugten Versatzpfaden dadurch zu bestimmen, dass in dem Teach-In Schritt zufällig gewählte Versatzpfade ausgeführt und in ihrer Wirkung auf das Moire-Störungsmaß untersucht werden, wobei deren Länge (Versatz) zufällig variiert, jedoch kleiner als eine Versatzamplitude gewählt wird. Dadurch kann eine Versatzamplitude, das heißt: eine maximale Länge des Versatzpfades, bestimmt werden, für die eine besonders gute Reduktion des Moire-Störungsmaßes erfolgt.

Mit Verfahren der diskreten Optimierung, die dem Fachmann bekannt sind, ist es möglich, Parameter zu ermitteln, die zu einer ausreichend guten oder optimalen Reduktion des Moire-Störungsmaßes führen. Diese Parameter können einen einzelnen bevorzugten Versatzpfad beschreiben. Sie können auch Eigenschaften angeben, beispielsweise eine Länge (einen Versatz), einen Längenbereich (ein Versatzintervall) oder eine Richtung, mit denen eine Mehrzahl von bevorzugten Versatzpfaden beschrieben ist.

Beispielsweise kann in dem Teach-In Schritt ein einziger bevorzugter Versatzpfad nach Länge (Versatz) und Verlauf ermittelt werden, der während der Aufnahme des mindestens einen Kamerabildes unverändert abgefahren wird.

Ferner können Versatzpfade im Ortsverlauf zufällig gewählt und auf eine Länge (einen Versatz) skaliert werden, welcher als bevorzugt ermittelt wurde.

Ein Vorteil der Ausführungsformmit einem Teach-In Schritt besteht darin, dass für die gewählte Anordnung aus Anzeigevorrichtung und Kamera eine optimale oder hinreichend gute Moire-Unterdrückung erzielt werden kann.

Nach dem Teach-In Schritt wird die Kamera während der Aufnahme von Kamerabildern so bewegt, dass jeweils das Kamerabild gegenüber dem Anzeigebild entlang des in dem Teach-In Schritt bestimmten bevorzugten Versatzpfads bewegt wird. Es ist auch möglich, dass der bevorzugte Versatzpfad stochastisch variiert wird, in dem der Kamerabewegung zufällige Abweichungen von dem bevorzugten Versatzpfad aufgeprägt werden.

Abhängig von der Anordnung der Anzeigepixel können unterschiedlich ausgerichtete Versatzpfade zu unterschiedlich guter Unterdrückung von Moire-Störungen führen. Beispielsweise kann es für eine Anzeigevorrichtung mit rechteckigen Anzeigepixeln, die in horizontaler (x-) Richtung anstoßend, in vertikaler (y-) Richtung jedoch beabstandet angeordnet sind, vorteilhaft sein, einen Versatzpfad mit überwiegend vertikaler Ausrichtung zu wählen.

Somit ermöglicht diese Ausführungsform die Wahl eines für eine bestimmte Anzeigevorrichtung maßgeschneiderten Versatzpfades für eine besonders gute Unterdrückung von Moire-Störungen.

Bei einer Ausführungsform des Verfahrens wird in einem Teach-In Schritt eine Versatzamplitude passend zu einer Anzeigevorrichtung und einer Kamera derart ermittelt, dass ein Moire-Störungsmaß unterhalb eines vorbestimmten Moire-Schwellwertes liegt und/oder minimiert wird, wenn die Kamera während der Aufnahme mindestens eines Kamerabildes um einen Versatzpfad mit einem Versatz bewegt wird, der kleiner oder gleich der Versatzamplitude ist. Während der Aufnahme des mindestens einen Kamerabildes wird ein Versatzpfad abgefahren, der nach Richtung, Verlauf und Versatzlänge zufällig gewählt ist, wobei die Versatzlänge aber kleiner oder höchstens gleich der im Teach-In Schritt ermittelten Versatzamplitude gewählt wird.

Bei einer Ausführungsform wird in einem Teach-In Schritt ein bevorzugter Versatz derart ermittelt, dass ein Moire-Störungsmaß minimiert wird, wenn die Kamera während der Aufnahme des mindestens einen Kamerabildes entlang eines Versatzpfades um den bevorzugten Versatz relativ zur Startposition versetzt wird. Zudem wird ein Versatzintervall vorbestimmter Intervallbreite ermittelt, welches den bevorzugten Versatz einschließt, bevorzugt symmetrisch einschließt. Zur Minimierung des Moire-Störungsmaßes kann, wie bereits beschrieben, ein diskretes Optimierungsverfahren eingesetzt werden.

Nach dem Teach-In Schritt wird die Kamera während der Aufnahme von Kamerabildern so bewegt, dass jeweils das Kamerabild gegenüber dem Anzeigebild entlang eines Versatzpfades mit einer Länge (einem Versatz) aus dem in dem Teach-In Schritt bestimmten Versatzintervall verschoben wird.

Bei dieser Ausführungsform ist es ausreichend, wenn in dem Teach-In Schritt als ein einziger Parameter die optimale oder bevorzugte Länge eines Versatzpfades auf die Kombination der Anzeigevorrichtung und der Kamera angepasst wird.

Es hat sich herausgestellt, dass Versatzpfade der Kamera relativ zur Anzeigevorrichtung, mit denen ein besonders gutes Ergebnis in der Moire-Korrektur erzielt werden kann, im Wesentlichen vom Pixelpitch der Anzeigevorrichtung und ferner vom auch vom Pixelpitch der Sensorpixel und vom Abbildungsmaßstab abhängig sind. Mit dieser Ausführungsform des Teach-In Schrittes ist daher eine besonders effiziente, auf die jeweilige Anordnung der Kamera und Anzeigevorrichtung angepasste Moire-Reduktion möglich.

Die Ermittlung eines Versatzpfades oder eines Versatzintervalls oder eines bevorzugten Versatzes in einem Teach-In Schritt kann auch jeweils bezogen auf einen Ausschnitt des Kamerabildes, das heißt: auf einen zusammenhängenden Bereich von Sensorpixeln, erfolgen.

So ist es bei gekrümmten Anzeigevorrichtungen, auf Grund von Verzeichnungen des Kameraobjektivs oder durch perspektivische Verzerrung beispielsweise möglich, dass für unterschiedliche Bereiche eines Kamerabildes unterschiedliche Versatzpfade, unterschiedliche Versatzintervalle oder unterschiedliche bevorzugte Versatze als besonders gut geeignet zur Moire-Korrektur erweisen.

Mit dieser Ausführungsvariante des Verfahrens wird in dem Teach-In-Schritt für verschiedene, ein Kamerabild insgesamt vollständig überdeckende Kamerabildbereiche jeweils ein zugeordneter Parameter der Kamerabewegung (Versatzpfad, Versatzintervall oder bevorzugter Versatz) durch diskrete Optimierung ermittelt. Anschließend wird für jeden Kamerabildbereich mindestens ein Kamerabild aufgenommen, wobei die Kamera entsprechend dem jeweils zugeordneten Parameter bewegt wird. Die Mehrzahl der so aufgenommenen Kamerabilder wird mittels eines Bildregistrierungsverfahrens aligniert und anschließend zu einem Moire-korrigierten Ergebnisbild pixelweise aufsummiert oder gemittelt.

Dadurch kann ein gutes Moire-korrigiertes Ergebnisbild auch dann gewonnen werden, wenn sich durch die geometrische oder optische Anordnung einer Anzeigevorrichtung eine Bewegung der Kamera auf die Abbildung des Anzeigebildes auf das Kamerabild in unterschiedlichen Bildbereichen unterschiedlich auswirkt.

Bei einer Ausführungsform wird als Moire-Störungsmaß ein Variationskoeffizient der Sensorpixelwerte gebildet, die aus mindestens einem Bereich eines Kamerabildes entnommen werden. Der Variationskoeffizient, das heißt: die auf den Erwartungswert bezogene Streuung, lässt sich besonders einfach und schnell ermitteln und gibt in guter Näherung den Einfluss von Moire-Störungen wieder.

Bei einer Ausführungsform des Verfahrens wird ein Versatzpfad stochastisch bestimmt. Der Versatzpfad kann seiner Länge, das heißt: dem abgefahrenen Versatz nach stochastisch bestimmt werden, indem diese Länge als in einem Längenintervall (dem Versatzintervall) gleichverteilte Zufallsgröße ermittelt wird. Ein Versatzpfad, der seinem Ortsverlauf nach vorgegeben oder auch zufällig bestimmt sein kann, wird entsprechend der so ermittelten Länge skaliert.

Dadurch wird bei einer Mehrzahl von unabhängig entsprechend dieser Gleichverteilung vorgenommenen Versatzbewegungen eine besonders gute Unterdrückung von Moire-Störungen erzielt.

Ein Versatzpfad kann auch dadurch stochastisch bestimmt werden, dass einem bevorzugten Versatzpfad, beispielsweise einem in einem Teach-In Schritt ermittelten Versatzpfad, stochastisch Abweichungen aufgeprägt werden.

Bei einer Ausführungsform der Erfindung erfolgt die Bewegung der Kamera relativ zur Anzeigevorrichtung entlang der Richtung einer Spalte und/oder einer Zeile der Matrix von Anzeigepixeln. Mit anderen Worten: die Bewegung der Kamera erfolgt für eine plane Anzeigevorrichtung parallel zu der Anzeigevorrichtung. Für eine gekrümmte Anzeigevorrichtung erfolgt die Bewegung der Kamera koplanar zu einer Tangentialebene, vorzugsweise zu einer Tangentialebene, die durch ein Anzeigepixel verläuft, das in oder nahe der Mitte der Matrix der Anzeigepixel angeordnet ist. Mit derartigen, in einer zweidimensionalen Ebene liegenden Versatzbewegungen lässt sich eine besonders gute Unterdrückung von Moire-Störungen erzielen.

Es ist auch möglich, bei einer gekrümmten Anzeigevorrichtung eine Mehrzahl von unterschiedlichen Tangentialebenen zu wählen. Dann werden für jede der Tangentialebenen eine jeweils parallel Bewegung der Kamera bei der Aufnahme mindestens eines Kamerabildes ausgeführt und die einzelnen Kamerabilder mittels eines Bildregistrierungsverfahrens aligniert und anschließend zu einem Moire-korrigierten Ergebnisbild pixelweise aufsummiert oder gemittelt. Dadurch ist eine besonders genaue Moire-Korrektur möglich.

Bei einer Ausführungsform des Verfahrens wird die Kamera entlang ihrer optischen Achse relativ zur Anzeigevorrichtung bewegt. Dadurch wird eine Defokussierung, das heißt: eine Faltung mit einer konzentrischen, zum Rand zu abfallenden PSF, bewirkt.

Diese Ausführungsform hat den Vorteil, dass eine Verschiebung nur entlang einer Bewegungsrichtung vorgenommen werden muss. Ein solches Verfahren ist leichter umsetzbar als eine Verschiebung entlang mehrerer Richtungen.

Bei einer Ausführungsform des Verfahrens wird die Kamera um die Startposition entlang eines Versatzpfades bewegt, der symmetrische, das heißt: in Betrag und Richtung gleiche, aber im Richtungssinn entgegengesetzte Teilpfade um die Startposition umfasst. Beispielsweise kann der Versatzpfad spiegelsymmetrisch gewählt sein:

$$x(t) = x_0 + \delta_x(t), 0 \leq t < \frac{T}{2}$$

$$y(t) = y_o + \delta_y(t), 0 \leq t < \frac{T}{2}$$

$$x\left(t + \frac{T}{2}\right) = x_0 - \delta_x(t), 0 \leq t < \frac{T}{2}$$

$$y\left(t + \frac{T}{2}\right) = y_o - \delta_y(t), 0 \leq t < \frac{T}{2}.$$

Dadurch wird erreicht, dass das Moire-korrigierte Ergebnisbild mit besonders geringen Abweichungen auf die Startposition bezogen werden kann.

Bei einer Ausführungsform des Verfahrens wird für eine Mehrzahl von Farbkanälen jeweils ein farbkanalbezogenes Ergebnisbild bestimmt, indem zwischen der Anzeigevorrichtung und dem Sensor der Kamera ein Farbfilter angeordnet wird, wobei für jeden Farbkanal ein farbkanalbezogenes Versatzintervall bestimmt wird und wobei die farbkanalbezogenen Ergebnisbilder gegeneinander registriert werden.

Derartige Farbfilter können unterschiedlich dick sein und unterschiedliche Brechungsindizes aufweisen und werden näherungsweise senkrecht zur optischen Achse des Kameraobjektivs zwischen der Anzeigevorrichtung und der Sensorfläche angeordnet. Sie können daher, beispielsweise für einen kollimierten Strahlverlauf, eine Parallelverschiebung hervorrufen, die abhängig vom Farbfilter unterschiedlich groß ist. Sie können auch, beispielsweise für einen divergenten Strahlverlauf, zur ortsabhängig (in der Sensorfläche) unterschiedlichen Verzeichnungen führen.

Mit der vorgeschlagenen Ausführungsform können Moire-korrigierte Farbbilder gewonnen werden, indem die registrierten farbkanalbezogenen Ergebnisbilder überlagert werden. Damit ist zusätzlich auch eine spektrale oder mindestens farbkanalbezogene Untersuchung von Anzeigevorrichtungen möglich.

Bei einem Verfahren zur Bewertung der Darstellungsgüte einer pixelbasierten Anzeigevorrichtung wird nach einem der vorangehend beschriebenen Verfahren ein Moire-korrigiertes Ergebnisbild aus mindestens einem mit einer Kamera aufgenommenen Kamerabild gewonnen und die Darstellungsgüte der Anzeigevorrichtung anhand dieses Moire-korrigierten Ergebnisbildes bestimmt.

Ein Vorteil dieses Verfahrens besteht darin, dass die Gütebewertung für die Anzeigevorrichtung nicht von Moire-Störungen beeinträchtigt oder verfälscht wird. Dadurch ist eine Bewertung möglich, die die tatsächliche Qualität der Anzeigevorrichtung wiedergibt. Zudem ist eine unverfälschte Bewertung mit einer besonders hohen Ortsauflösung, vorzugsweise mit einer auf einen einzelnen Anzeigepixel genauen Ortsauflösung, möglich, indem Aliasing-Artefakte mit hohen Ortsfrequenzen (nahe der Nyquist-Frequenz) eliminiert werden. Dadurch können auch örtlich kleine Defekte oder Störungen an einer Anzeigevorrichtung erkannt und bewertet werden. Insbesondere werden dadurch aber falsch positive Detektionen von Pixelfehlern vermieden. Somit ist eine besonders zuverlässige Bewertung von Anzeigevorrichtungen möglich.

Bei einer Ausführungsform dieses Verfahrens werden defekte Anzeigepixel der Anzeigevorrichtung detektiert und/oder lokalisiert. Dadurch ist eine besonders einfache Qualitätskontrolle von Anzeigevorrichtungen möglich.

Bei einer Ausführungsform wird die Gleichmäßigkeit der Helligkeitsverteilung über der Anzeigevorrichtung ermittelt. Ein Vorteil der Erfindung besteht darin, dass Aliasing-Artefakte mit niedrigen Ortsfrequenzen eliminiert werden, die Fehler oder Störungen der Gleichförmigkeit der Helligkeitsverteilung vortäuschen.

Insbesondere sind mit dem erfindungsgemäßen Bewertungsverfahren als DeMURA bekannte Verfahren zur Korrektur von Helligkeitsunterschieden möglich, welche fertigungstechnologisch bedingt und/oder alterungsbedingt bei pixelbezogen unterschiedlicher Brenndauer oder Intensitätsstatistik zwischen Anzeigepixeln auftreten können.

Bevorzugt werden Helligkeitsunterschiede bewertet und/oder Parameter zur Korrektur solcher Helligkeitsunterschiede anhand von Anzeigebildern ermittelt, die eine geringe Helligkeit oder Leuchtdichte aufweisen.

Bei einer Ausführungsform des Verfahrens wird zur Bewertung der Darstellungsgüte die örtliche Verteilung einer photometrischen Kenngröße, vorzugsweise der Leuchtdichte, über der Anzeigevorrichtung ermittelt. Damit ist eine besonders genaue und objektiv reproduzierbare Bewertung der Anzeigevorrichtung möglich.

Eine Vorrichtung zur Durchführung eines der vorgenannten Verfahren umfasst eine Kamera, eine Positioniereinheit, eine Steuereinheit und eine Auswerteeinheit. Die Positioniereinheit kann ortsfest zu einer Anzeigevorrichtung ausgebildet und zur Bewegung der Kamera eingerichtet sein. Die Positioniereinheit kann auch ortsfest zur Kamera angeordnet und zur Bewegung einer Anzeigevorrichtung eingerichtet sein.

Die Positioniereinrichtung ist zur motorischen Bewegung der Kamera oder alternativ der Anzeigevorrichtung um einen innerhalb des Versatzintervalls liegenden Versatz eingerichtet. Die Steuereinheit ist zur Auslösung der Aufnahme eines Kamerabildes mit der Kamera eingerichtet.

Die Auswerteeinheit ist zur Bildung eines Moire-korrigierten Ergebnisbildes mit einem der vorangehend beschriebenen Verfahren eingerichtet.

Die Vorteile dieser Vorrichtung ergeben sich aus den bereits beschriebenen Vorteilen der Verfahren.

Die Positioniereinheit kann zur stochastischen oder quasi-stochastischen Bewegung der Kamera unabhängig von der Aufnahme eines Kamerabildes eingerichtet sein.

In einer Ausführungsform der Erfindung ist es aber auch möglich, dass die Steuereinheit zur Ansteuerung der Positioniereinheit und zu einer darauf, das heißt: auf die Bewegung der Kamera mittels der Positioniereinheit, abgestimmten Auslösung der Aufnahme eines Kamerabildes eingerichtet ist. Dadurch sind Versatzpfade reproduzierbar und deren Filterwirkung zur Unterdrückung von Moire-Störungen genauer einstellbar.

Bei einer Ausführungsform der Vorrichtung sind die Steuereinheit und die Auswerteeinheit in einer Steuer- und Auswerteeinheit zusammengefasst. Dies ermöglicht eine besonders kompakte Bauform und den Einsatz kostengünstiger, flexibler Komponenten. Beispielsweise kann eine Steuer- und Auswerteeinheit als PC (personal computer) oder Notebook ausgebildet sein.

Bei einer Ausführungsform ist die Positioniereinheit als Goniometer ausgebildet, das zur Drehung der Kamera um bevorzugt zwei zueinander orthogonale Drehachsen eingerichtet ist. Goniometer sind zur Leuchtdichtemessung übliche und in diesem Anwendungsbereich leicht verfügbare Positioniereinheiten, die einen besonders kostengünstigen Aufbau ermöglichen.

Bevorzugt ist das Goniometer für eine präzise Drehung der Kamera oder der Anzeigevorrichtung um sehr kleine Winkel, bevorzugt um Winkel von weniger als einem Grad, besonders bevorzugt um Winkel von weniger als einer Bogenminute eingerichtet. Für derartige sehr kleine Drehwinkel wird, bei einem ausreichend großen Abstand zwischen der Anzeigevorrichtung und der Kamera durch die Drehung mittels des Goniometers ein näherungsweise koplanarer Versatz des Anzeigebildes relativ zum Kamerabild erreicht.

Die Positioniereinheit kann aber auch als beliebige andere, entlang mindestens einer, bevorzugt entlang von mindestens zwei zueinander orthogonalen Bewegungsrichtungen motorisch linear verschiebbare Bewegungseinheit ausgebildet sein.

Beispielhaft kann die Positioniereinheit auch als Industrieroboter ausgebildet sein. Damit ist eine besonders flexible Bewegung der Anzeigevorrichtung oder der Kamera möglich.

Die Positioniereinheit kann auch als Kreuztisch (XY-Tisch) ausgebildet sein, der entlang von zwei Achsen verfahren werden kann. Das Verfahren entlang der Achsen kann mittels elektrisch betriebener rotatorischer und/oder linearer Antriebe erfolgen. Beispielsweise können rotatorische Motoren mit Spindelantrieb zum Verfahren eingesetzt werden. Es ist auch möglich, piezoelektrische Linearantriebe einzusetzen.

Bei einer Ausführungsform der Vorrichtung ist die Positioniereinheit als mindestens eine Vibrationseinheit ausgebildet, die an einem Gehäuse der Kamera angeordnet ist und in Vibration versetzt werden kann. Mittels der Vibrationseinheit wird die Kamera während der Aufnahme eines Kamerabildes in Schwingung versetzt. Die Schwingung der Kamera erscheint als Versatzpfad des Kamerabildes gegenüber dem Anzeigebild.

Es ist möglich, dass mehrere Vibrationseinheiten an der Kamera angeordnet sind, beispielsweise je eine Vibrationseinheit in horizontaler x-Richtung (Zeilenrichtung der Sensorpixel), in vertikaler *y*-Richtung (Spaltenrichtung der Sensorpixel) sowie eine Vibrationseinheit in Richtung der optischen Achse der Kamera. Dadurch kann ein Versatzpfad besonders flexibel gestaltet werden.

Eine solche Vibrationseinheit kann beispielsweise als Piezoaktor oder als Lautsprecher oder als Vibrationsmotor ausgebildet und an dem Kameragehäuse angeordnet werden.

Bei einer Ausführungsform mit einem Lautsprecher kann der mindestens eine Lautsprecher mit einem harmonischen Ansteuersignal angesteuert werden. Für eine solche Ausführungsform kann ein Teach-In Schritt beispielsweise darin bestehen, eine Frequenz und/oder eine Amplitude des Ansteuersignals so zu bestimmen, dass das Moire-Störungsmaß besonders gut reduziert wird.

Bei einer Ausführungsform ist die Kamera als Leuchtdichtemesskamera ausgebildet und zur Aufnahme der Ortsverteilung einer photometrischen Kenngröße, bevorzugt einer von einer Anzeigevorrichtung emittierten Leuchtdichte, eingerichtet. Damit ist eine besonders genaue und objektiv reproduzierbare Bewertung der Anzeigevorrichtung möglich.

Ausführungsbeispiele der Erfindung werden im Folgenden anhand von Zeichnungen näher erläutert. Darin zeigen:

Figur 1 schematisch eine Anordnung zur Aufnahme von Anzeigebildern einer Anzeigevorrichtung,

Figuren 2A und 2B schematisch Anordnungen von Sensorpixeln und Anzeigepixeln,

Figuren 3A und 3B schematisch den Betragsverlauf von Fouriertransformierten eines ersten und eines zweiten Kamerabildes sowie

Figur 4 schematisch den Betragsverlauf eines Amplitudengangs eines Versatzfilters.

Einander entsprechende Teile sind in allen Figuren mit den gleichen Bezugszeichen versehen.

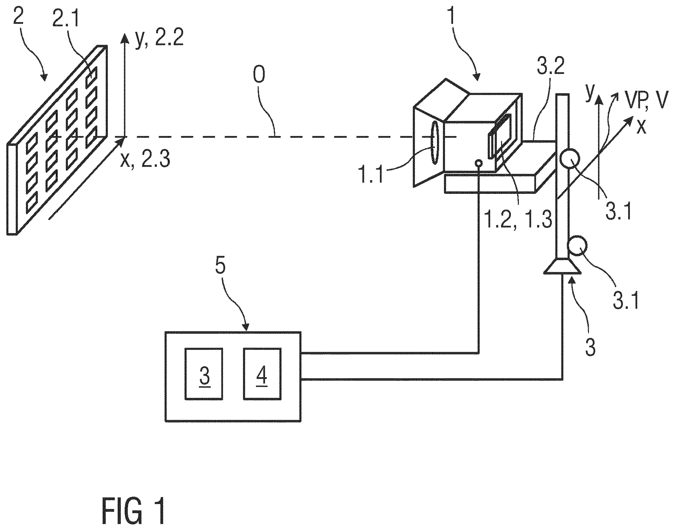

**Figur 1** zeigt schematisch eine Anordnung zur Aufnahme eines von einer Anzeigevorrichtung 2 dargestellten Anzeigebildes mittels einer Kamera 1. Die Anzeigevorrichtung 2 umfasst eine Mehrzahl von Anzeigepixeln 2.1, die matrixartig entlang von Zeilen 2.3 und Spalten 2.2 angeordnet sind. Die Zeilen 2.3 verlaufen näherungsweise parallel zu einer horizontalen x-Richtung. Die Spalten 2.2 verlaufen näherungsweise parallel zu einer vertikalen y-Richtung.

Die Kamera 1 umfasst matrixartig in einer Sensorfläche 1.2 angeordnete Sensorpixel 1.3. Vor der Sensorfläche 1.2 ist ein Kameraobjektiv 1.1 angeordnet, das zur Abbildung des von den Anzeigepixeln 2.1 dargestellten Anzeigebildes auf die Sensorfläche 1.2 eingerichtet ist. Die optische Achse O der Kamera 1 ist näherungsweise senkrecht und mittig auf die von den Anzeigepixeln 2.1 aufgespannte Fläche gerichtet.

Die Kamera 1 ist in ihrer Gesamtheit (umfassend das Kameraobjektiv 1.1 und die Sensorfläche 1.2 mit den Sensorpixeln 1.3) an einer Halteplatte 3.2 einer Positioniereinheit 3 angeordnet, beispielsweise eingespannt oder verschraubt. Die Positioniereinheit 3 ist zur motorischen Bewegung der Halteplatte 3.2 entlang der horizontalen x-Richtung und entlang der vertikalen y-Richtung mittels Motoren 3.1 eingerichtet. An Stelle von Motoren können auch andere Bewegungselemente, beispielsweise piezoelektrische Aktuatoren, für die lineare Bewegung entlang der x- und der y-Richtung eingesetzt werden.

Mittels der Positioniereinheit 3 kann die Kamera 1 relativ zur Anzeigevorrichtung 2 entlang eines Versatzpfades VP um einen Versatz V bewegt werden. Der Versatz V bezeichnet die Länge des Versatzpfades VP.

Die Motoren 3.1 und die Bildaufnahme durch die Kamera 1 werden von einer damit verbundenen Steuereinheit 4 derart angesteuert, dass während der Aufnahme eines Kamerabildes, das durch die von den Sensorpixeln 1.3 ausgelesenen Sensorwerte gebildet wird, die Kamera 1 gegenüber der Anzeigevorrichtung 2 in x- und/oder in y-Richtung versetzt wird.

Es ist auch möglich, dass eine Mehrzahl von Kamerabildern aufgenommen wird, während die Kamera 1 gegenüber der Anzeigevorrichtung 2 versetzt wird.

Die Kamerabilder werden von der Kamera 1 in einer Auswerteeinheit 5 ausgelesen. Wird eine Mehrzahl von Kamerabildern während der Bewegung der Kamera 1 aufgenommen, so werden die einzelnen Kamerabilder von der Auswerteeinheit 5 zu einem Moire-korrigierten Ergebnisbild überlagert, beispielsweise addiert oder gemittelt.

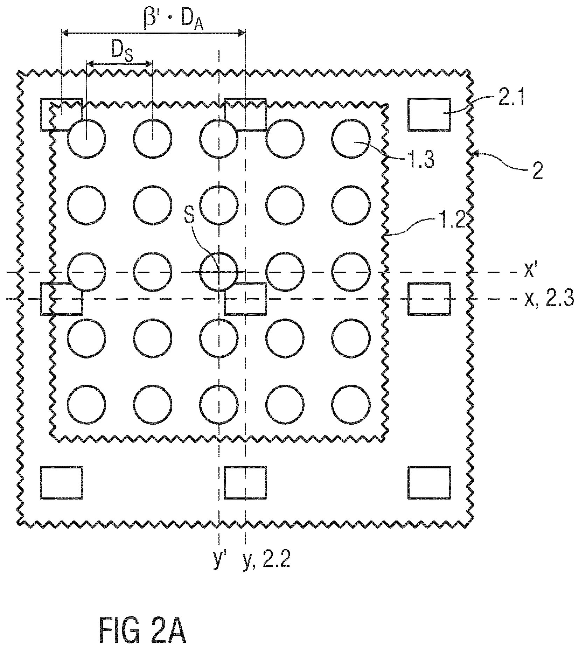

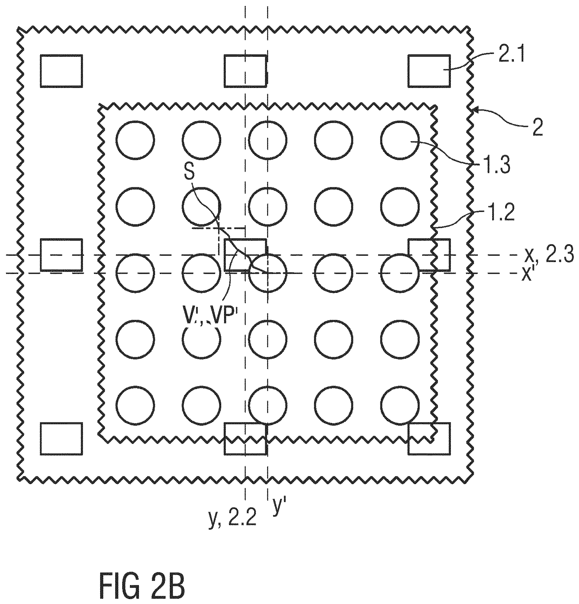

Die **Figuren 2A und 2B** zeigen schematisch die Lageveränderung der Anzeigepixel 2.1 gegenüber den Sensorpixeln 1.3 bei einer Bewegung der Kamera 1 gegenüber der Anzeigevorrichtung 2. Zur besseren Verdeutlichung sind nur jeweils ein Teil der matrixartig angeordneten Anzeigepixel 2.1 und ein Teil der matrixartig angeordneten Sensorpixel 1.3 dargestellt.

Die Sensorpixel 1.3 sind mit einem Sensorpixelpitch $D_S$ beabstandet. Zur vereinfachten Darstellung ist der Sensorpixelpitch $D_S$ in vertikaler y'-Richtung wie in horizontaler x'-Richtung gleich gewählt, es sind jedoch auch vertikal und horizontal unterschiedliche Abstände möglich.

In analoger Weise sind die Anzeigepixel 2.1 mit einem Anzeigepixelpitch $D_A$ beabstandet. Für den Fall, dass der von dem Kameraobjektiv 1.1 erzielte Abbildungsmaßstab $\beta'$ von 1 abweicht, erscheinen die Anzeigepixel 2.1 gegenüber dem Sensorpixelpitch $D_S$ in einem um diesen Abbildungsmaßstab vergrößerten oder verkleinerten Abstand. Insbesondere bestimmt die sich daraus ergebende Reproduction Scale (RPS), welche Ortsfrequenzen durch Aliasing (Moire) im Kamerabild fehlerhaft erscheinen.

Figur 2A zeigt die Lage der Sensorpixel 1.3 in einer Startposition S. Figur 2B zeigt die Lage der Sensorpixel 1.3 nach einer Bewegung der Kamera 1 entlang eines Versatzpfades VP während einer Belichtung. Der Versatzpfad VP hat eine Länge, die als Versatz V bezeichnet wird.

In der Projektion auf die Sensorfläche 1.2 erscheint der Versatzpfad VP unter Berücksichtigung des bildseitigen Abbildungsmaßstabs $\beta'$ als Versatzpfadbild VP' mit einer Länge, die im Folgenden als Bildversatz V' bezeichnet wird.

Die von einem oder mehreren Anzeigepixel 2.1 auf einen Sensorpixel 1.3 abgebildete Leuchtdichte (die Abbildung des Anzeigebildes auf der Sensorfläche) wird bei unbewegter Kamera 1 nur mit der Pixelapertur (der point spread function PSF) des jeweiligen Sensorpixels 1.3 gefaltet.

Im Ortsfrequenzbereich bedeutet dies die Multiplikation des Spektrums des abgebildeten Anzeigebildes der Anzeigevorrichtung 2 (das heißt: der Matrix der Anzeigepixel 2) mit dem Spektrum der PSF (der module transfer function MTF). Die Matrix aller Sensorpixel 1.3 bedeutet eine Abtastung, im Frequenzbereich eine Vervielfachung des sich ergebenden Spektrums. Dabei können höhere Frequenzanteile in das Basisspektrum gelangen, was zu Aliasing führt

Durch die Bewegung der Kamera 1 wird die von einem oder mehreren Anzeigepixel 2.1 auf einen Sensorpixel 1.3 abgebildete Leuchtdichte (die Abbildung des Anzeigebildes auf dem Sensor) mit der Pixelapertur (point spread function PSF) des jeweiligen Sensorpixels 1.3 sowie zusätzlich mit einem Filterkern $h(x', y')$, der durch das Versatzpfadbild VP' bestimmt wird, gefaltet. Die Ortskurve des Versatzpfadbildes VP' ist, ausgehend von der Startposition S mit den Koordinaten $x'_0, y'_0$, durch die Bewegung $\delta_x(t), \delta_y(t)$ in (horizontaler) x'-Richtung beziehungsweise in vertikaler y'-Richtung bestimmt. Der Filterkern $h(x', y')$ nimmt an den durch die Gesamtheit der Werte $\{\delta_x(t), \delta_y(t)\}$ bestimmten Stellen einen Wert an, der umgekehrt proportional zur Bewegungsgeschwindigkeit $v(t)$ des Anzeigebildes gegenüber dem Kamerabild an diesen Stellen ist und der insbesondere verschieden von 0 ist. An allen übrigen Stellen $(x',y') \notin \{\delta_x(t), \delta_y(t)\}$ ist $h(x',y') = 0$.

Im Ortsfrequenzbereich bedeutet dies somit die Multiplikation des Spektrums des Anzeigebildes (Matrix der Anzeigepixel 2.1) mit dem Spektrum der PSF (MTF) und dem Spektrum des Versatzpfadbildes VP'.

Durch die Bewegung der Kamera 1 wird daher erreicht, dass die PSF der Sensorpixel 1.3 mit dem Versatzpfadbild VP' gefaltet wird, was im Ortsfrequenzbereich zu einer Multiplikation des Spektrums mit der Fouriertransformierten des Versatzpfadbildes VP', das heißt: zu einer Filterung führt. Damit besteht durch die Wahl des Versatzpfadbildes VP', welches durch den Versatzpfad VP bestimmt wird, die Möglichkeit der Unterdrückung oder Verringerung von störenden Frequenzanteilen.

Somit kann durch den Versatzpfad VP ein Filterkern $h(x', y')$ für eine ortskontinuierliche Filterung, insbesondere für eine Glättung bestimmt werden, der Moire-Störungen in dem Kamerabild entfernt oder unterdrückt. Mit dem vorgeschlagenen Teach-In Verfahren kann durch diskrete Optimierung ein Versatzpfad VP derart bestimmt werden, dass eine für die Kombination der Kamera 1 mit der Anzeigevorrichtung 2 bestmögliche Reduktion der Moire-Störung erzielt wird.

Der Vorteil gegenüber einer ortsdiskreten Filterung des Kamerabildes besteht darin, dass Moire-Störungen gezielt an im Prinzip beliebigen Ortsfrequenzen entfernt oder reduziert werden können. Insbesondere können durch eine ortskontinuierliche Filterung mit dem Filterkern $h(x', y')$ auch Ortsfrequenzen, die nicht ein ganzzahliges Vielfaches des Kehrwertes des Sensorpixelpitches $f_o = \dfrac{1}{D_S}$ sind und die daher einer ortsdiskreten Filterung des diskretisierten Kamerabildes nicht zugänglich sind, gedämpft oder eliminiert werden. Dadurch ist eine Unterdrückung von Moire-Störungen unter Beibehaltung einer hohen Ortsauflösung möglich.

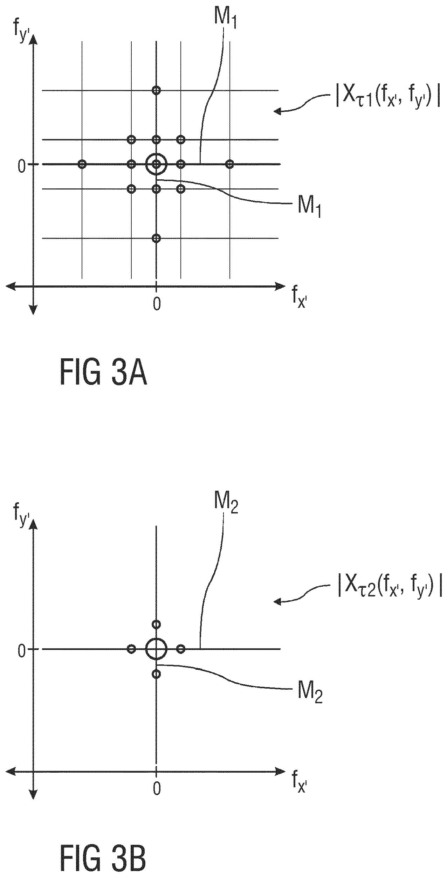

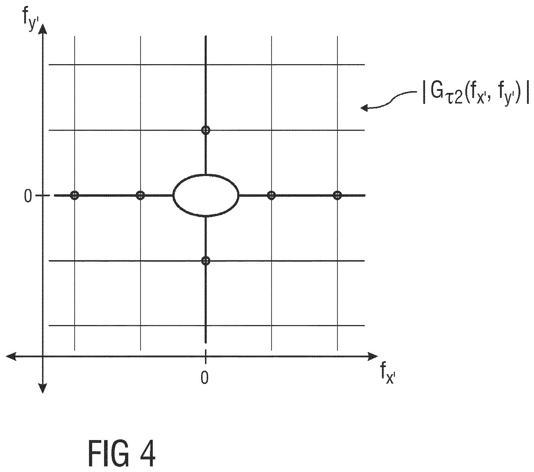

Eine Ausführungsform zu einer Weiterbildung der Erfindung wird nachfolgend anhand der Figuren 3A, 3B und 4 erklärt.

Figur 3A zeigt schematisch einen ersten Betragsverlauf $|X_{\tau 1}(f_x, f_y)|$ über einer horizontalen und einer vertikalen Ortsfrequenz $f_x, f_y$. Der erste Betragsverlauf $|X_{\tau 1}(f_x, f_y)|$ ist der Betrag der der Fouriertransformierten $|X_{\tau 1}(f_x, f_y)|$ eines ersten Kamerabildes, das über eine erste Belichtungszeit $\tau 1$ hinweg belichtet wurde.

Die Belichtung des ersten Kamerabildes wird so ausgeführt, dass die Kamera 1 während der ersten Belichtungszeit $\tau 1$ relativ zur Anzeigevorrichtung 2 nicht oder nur geringfügig bewegt wird. Unter "geringfügig bewegt" soll hierbei und im Folgenden eine Bewegung verstanden werden, die einen Versatz V bewirkt, der geringer als der Anzeigepixelpitch $D_A$, bevorzugt geringer als $\dfrac{D_A}{3}$ ist. Mit anderen Worten: das durch die Bewegung der Kamera 1 relativ zur Anzeigevorrichtung 2 bewirkte Versatzpfad VP weist einen zur Sensorfläche 1.2 parallelen Versatz V auf, der kleiner als der Anzeigepixelpitch $D_A$, bevorzugt kleiner als $\dfrac{D_A}{3}$ ist.

Die Aufnahme des ersten Kamerabilds kann erfolgen, indem die erste Belichtungszeit $\tau1$ bezogen auf die Bewegungsgeschwindigkeit der Kamera 1 sehr kurz gewählt wird (das heißt: so gewählt wird, dass das Versatzpfadbild VP' sehr kurz ist). Dabei kann eine Verkürzung der ersten Belichtungszeit $\tau1$ dadurch kompensiert werden, dass die Helligkeit der Anzeigepixel 2.1 umgekehrt proportional zur Veränderung der ersten Belichtungszeit $\tau1$ erhöht wird.

Zusätzlich oder alternativ kann die Aufnahme des ersten Kamerabildes erfolgen, indem die Bewegung der Kamera 1 während der ersten Belichtungszeit $\tau1$ vermindert oder gestoppt wird.

Durch den vergleichsweise sehr kurzen oder vollständig unterdrückten Bildversatz V' wird die anhand der Figuren 2A und 2B erläuterte Filterwirkung des durch das Versatzpfadbild VP' bestimmten Filterkern $h(x', y')$ vermindert. Im Extremfall, bei völliger Ruhe der Kamera 1 gegenüber der Anzeigevorrichtung 2, entartet der Filterkern $h(x', y')$ in einen Dirac - Impuls und bewirkt keine Veränderung an dem von den Sensorpixeln 1.3 aufgenommenen ersten Kamerabild.

Dementsprechend weist die Fouriertransformierte $X_{\tau1}(f_{x'}, f_{y'})$ Aliasing (das heißt: Moire - Störungen) auf. In Figur 3A zeigen helle Grauwerte hohe Betragsamplituden der Fouriertransformierten $X_{\tau1}(f_{x'}, f_{y'})$ an, während dunkle Grauwerte geringe Betragsamplituden anzeigen. Die horizontale Dimension entspricht in Figur 3A der horizontalen Ortsfrequenz $f_{x'}$, welche der horizontalen x'-Richtung der Sensorfläche 1.2 zugeordnet ist. Die vertikale Dimension entspricht in Figur 3A der vertikalen Ortsfrequenz $f_{y'}$, welche der vertikalen y'-Richtung der Sensorfläche 1.2 zugeordnet ist.

Das Aliasing (Moire) im ersten Kamerabild bewirkt in der Fouriertransformierten $X_{\tau1}(f_{x'}, f_{y'})$ markante, hell (weiß) hervortretende erste Störungen $M_1$ in der Art von vertikalen und horizontalen Linien, die hohen Betragsamplituden bei gewissen horizontalen und vertikalen Ortsfrequenzen entsprechen.

Figur 3B zeigt in analoger Weise wie Figur 3A einen zweiten Betragsverlauf $|X_{\tau2}(f_{x'}, f_{y'})|$ der Fouriertransformierten eines zweiten Kamerabildes, das über eine zweite Belichtungszeit $\tau2$ hinweg belichtet wird und in dem das gleiche Anzeigebild, dargestellt von der gleichen Anzeigevorrichtung 2 aufgenommen wurde wie beim ersten Kamerabild.

Im Unterschied zum ersten Kamerabild wird die Belichtung des zweiten Kamerabildes so vorgenommen, dass durch Bewegung der Kamera 1 relativ zur während der zweiten Belichtungszeit $\tau2$ ein Versatzpfadbild VP mit einem zur Sensorfläche 1.2 parallelen Versatz V erzeugt wird, der zwischen dem Einfachen und dem Fünffachen des Anzeigepixelpitches $D_A$ liegt. Mit anderen Worten: das zweite Kamerabild wird so aufgenommen, wie anhand der Figuren 2A und 2B bereits erklärt wurde.

Auch in der Fouriertransformierten des zweiten Kamerabildes tritt Aliasing (Moire) als zweite Störungen $M_2$ in Erscheinung. Jedoch bewirkt die bereits erläuterte Filterwirkung des durch das Versatzpfadbild VP' bestimmten Filterkerns $h(x', y')$ gegenüber der ersten Störung $M_1$ in der Fouriertransformierten des ersten Kamerabilds eine deutliche Verringerung dieser zweiten Störung $M_2$.

Die an dem zweiten Kamerabild mit dem Versatz V der Kamera 1 gegenüber der Anzeigevorrichtung 2 während der zweiten Belichtungszeit $\tau2$ erzielte Unterdrückung des Aliasing (Moire) lässt sich systemtheoretisch als Übertragungsfunktion eines Versatzfilters beschreiben, welche sich aus dem Quotienten der Fouriertransformierten des zweiten Kamerabildes $X_{\tau2}(f_{x'}, f_{y'})$ (mit Moire - unterdrückendem Versatz V) bezogen die Fouriertransformierte des ersten Kamerabildes $X_{\tau1}(f_{x'}, f_{y'})$ (ohne Moire - unterdrückenden Versatz V) ergibt.

Insbesondere lässt sich die frequenzselektive Unterdrückung durch den Versatz V bei der Aufnahme des zweiten Kamerabildes beschreiben als Amplitudengang $|G_{\tau2}(f_{x'}, f_{y'})|$ eines derartigen Versatzfilters.

Beispielhaft kann der Amplitudengang $|G_{\tau2}(f_{x'}, f_{y'})|$ aus dem Betragsverhältnis des zweiten zum ersten Betragsverlauf bestimmt werden:

$$\left|G_{\tau2}\left(f_{x'}, f_{y'}\right)\right| = \frac{\left|X_{\tau2}\left(f_{x'}, f_{y'}\right)\right|}{\left|X_{\tau1}\left(f_{x'}, f_{y'}\right)\right|}$$

Alternativ kann die Bestimmung des Amplitudengangs $|G_{\tau2}(f_{x'}, f_{y'})|$ auch auf einer lokalen Segmentierung basieren, welche in der Art einer Bildverarbeitungsoperation jedem Betragswert des Amplitudengangs $|G_{\tau2}(f_{x'}, f_{y'})|$ schwellwertabhängig einen Binärwert $|\bar{G}_{\tau2}(f_{x'}, f_{y'})| \in \{0,1\}$ zuordnet.

Beispielsweise kann diese Bildverarbeitungsoperation auf das Betragsverhältnis des zweiten zum ersten Betragsverlauf angewendet werden. Dadurch wird der Amplitudengang $|G_{\tau2}(f_{x'}, f_{y'})|$ in einen binären Amplitudengang $|\bar{G}_{\tau2}(f_{x'}, f_{y'})|$ transformiert. Generell können auch andere Operationen oder zusätzliche Operationen, wie etwa logische Operationen oder morphologische Operationen aus dem Bereich der Bildverarbeitung genutzt werden, um einen Amplitudengang $|G_{\tau2}(f_{x'}, f_{y'})|$ aus $|X_{\tau1}(f_{x'}, f_{y'})|$ und $|X_{\tau2}(f_{x'}, f_{y'})|$ abzuleiten. Beispielsweise ist es möglich, den ersten und zweiten Betragsverlauf $|X_{\tau1}(f_{x'}, f_{y'})|$, $|X_{\tau2}(f_{x'}, fy')|$ vor der Quotientenbildung in gleicher oder ähnlicher Weise zu binarisieren wie den Amplitudengang $|G_{\tau2}(f_{x'}, f_{y'})|$ und anschließend einen Amplitudengang $|G_{\tau2}(f_{x'}, f_{y'})|$ mittels logischer Operatoren wie einer exklusiv-Oder-Verknüpfung (XOR) abzuleiten

Generell besteht das Ziel bei der Definition eines Versatzfilters darin, einen Amplitudengang $|G_{\tau2}(f_{x'}, f_{y'})|$ derart zu bestimmen, dass darin Paaren von horizontalen und vertikalen Ortsfrequenzen $(f_{x'}, f_{y'})$ dann ein niedriger Betrag oder Null zugeordnet wird, wenn dort in dem ersten (nicht bereinigten) Betragsverlauf $|X_{\tau1}(f_{x'}, f_{y'})|$ eine hohe Amplitude und in dem zweiten (bereinigten) Betragsverlauf $|X_{\tau2}(f_{x'},f_{y'})|$ eine vergleichsweise sehr geringe Amplitude ermittelt wird.

Figur 4 zeigt schematisch den Amplitudengang $|\tilde{G}_{\tau2}(f_{x'},f_{y'})|$ eines Versatzfilters V, der aus dem ersten und dem zweiten Betragsverlauf $|X_{\tau1}(f_{x'},f_{y'})|$, $|X_{\tau2}(f_{x'},f_{y'})|$ ermittelt wird. Der Amplitudengang $|G_{\tau2}(f_{x'},f_{y'})|$ gibt für jeweils eine Parameterkombination einer horizontalen und einer vertikalen Ortsfrequenz das Maß der Dämpfung (beziehungsweise Verstärkung) an, dem ein Kamerabild frequenzselektiv unterzogen wird.

Das Anwenden eines binären Amplitudenganges $|\tilde{G}_{\tau2}(f_{x'},f_{y'})|$ hat gegenüber einem Versatzfilter mit werte-kontinuierlichem Amplitudengang $|G_{\tau2}(f_{x'},f_{y'})|$ den Vorteil, dass auch noch in $|X_{\tau2}(f_{x'},f_{y'})|$ vorhandes (Rest-) Moire unterdrückt werden kann, solange es nur deutlich schwächer ausgeprägt ist als in $|X_{\tau1}(f_{x'},f_{y'})|$, da alle zwischen $|X_{\tau1}(f_{x'},f_{y'})|$, und $|X_{\tau2}(f_{x'},f_{y'})|$ deutlich unterschiedlichen Frequenzanteile vollständig unterdrückt werden. Außerdem können einfache zusätzliche morphologische Operationen auf dem binären Amplitudengang $|\tilde{G}_{\tau2}(f_{x'},f_{y'})|$, wie etwa die Dilatation, die Robustheit des Verfahrens weiter steigern.

Durch Anwendung eines Versatzfilters ist es möglich, eine Moire - Unterdrückung auch in einem Kamerabild vorzunehmen, das ohne oder mit nur unwesentlichem Versatz V während der Belichtung aufgenommen wurde. Dazu wird dieses Kamerabild einer Fouriertransformation unterzogen. Die Fouriertransformierte des Kamerabildes $(X(f_{x'},f_{y'}))$ wird frequenzselektiv mit dem Amplitudengang $|G_{\tau2}(f_{x'},f_{y'})|$ des wie oben erklärt aus dem ersten und dem zweiten Kamerabild ermittelten Versatzfilters multipliziert:

$$X'(f_{x'},f_{y'}) = X(f_{x'},f_{y'}) \cdot \left| G_{\tau2}(f_{x'},f_{y'}) \right|$$

Die so gewonnene ortsfrequenzgewichtete Fouriertransformierte $X'(f_{x'},f_{y'})$ wird bei den Ortsfrequenzen $f_{x'},f_{y'}$, bei denen starke erste Störungen $M_1$ im ersten Kamerabild, jedoch keine oder nur geringe Störungen $M_2$ im zweiten Kamerabild präsent sind, besonders stark gedämpft, denn für diese Ortsfrequenzen wird der Amplitudengang $|\tilde{G}_{\tau2}(f_{x'},f_{y'})|$ des Versatzfilters nahezu Null oder Null. Erfindungsgemäß wird die ortsfrequenzgewichtete Fouriertransformierte $X'(f_{x'},f_{y'})$ anschließend einer inversen Fouriertransformation (Fourier-Rücktransformation) unterzogen, in deren Ergebnis ein Moire-korrigiertes Ergebnisbild gewonnen wird.

Mit anderen Worten: sind die geometrischen (hinsichtlich der Anordnung von Kamera 1 und Anzeigevorrichtung 2) und die wesentlichen lichttechnischen Verhältnisse gegenüber der Aufnahme des ersten und des zweiten Kamerabildes nicht oder nur geringfügig verändert, so kann durch die Anwendung des Amplitudengangs $|G_{\tau2}(f_{x'},f_{y'})|$ auf die Fouriertransformierte eines Kamerabildes und eine anschließende inverse Fouriertransformation (Fourier-Rücktransformation) eine gleiche oder ähnliche Unterdrückung von Aliasing (Moire) - Störungen erzielt werden wie durch das Verfahren der Kamera 1 gegenüber der Anzeigevorrichtung 2 entlang desselben Versatzpfades VP, wie er bei der Aufnahme des zweiten Kamerabildes gewählt wurde.

Dadurch ist es möglich, eine gleiche oder ähnliche Unterdrückung von Störungen $M_1$, $M_2$ auch dann zu erzielen, wenn die Kamera 1 während der Aufnahme des Kamerabildes nicht oder nur geringfügig bewegt wird. Dadurch kann insbesondere eine mechanische Belastung der Kamera 1 und/oder der Anzeigevorrichtung 2 vermieden werden, wie sie beispielsweise durch vibrationsartige Versatzbewegungen erzeugt wird.

Ferner ist es dadurch möglich, auch Störungen in Kamerabildern zu unterdrücken, die mit einer sehr kurzen Belichtungszeit aufgenommen werden und bei denen dadurch keine Versatzbewegung möglich ist, die für eine ausreichende Störungsunterdrückung erforderlich wäre. Zudem ist es möglich, Störungen in weiteren Kamerabildern zu unterdrücken, welche in einer ähnlichen Aufnahmesituation aufgenommen wurden, beispielsweise Kamerabildern von einer anderen, aber baugleichen Anzeigevorrichtung.

Das dritte und eine Vielzahl von weiteren Kamerabildern kann von anderen Anzeigevorrichtungen 2 aufgenommen werden als das erste und das zweite Kamerabild. Beispielsweise können Anzeigevorrichtungen 2, die in einem Produktionsprozess fortlaufend baugleich gefertigt werden, gegenüber der Kamera 1 im Rahmen der für Qualitätskontrollen üblichen Toleranzen gleich angeordnet werden wie eine erste Anzeigevorrichtung 2, von der das erste und zweite Kamerabild aufgenommen wurden.

Das dritte und weitere Kamerabild wird dann von diesen fortlaufend ausgetauschten Anzeigevorrichtungen 2 aufgenommen. Moire-Störungen im dritten und weiteren Kamerabild werden durch Anwendung des Versatzfilters entfernt oder gedämpft, welcher anhand des ersten und zweiten Kamerabildes für eine zwar andere, aber baugleiche erste Anzeigevorrichtung 2 ermittelt wurde.

Um eine größere Robustheit gegenüber den in der Praxis zu erwartenden geringfügigen geometrischen Änderungen der Aufnahmesituation zwischen baugleichen Anzeigevorrichtungen 2 zu erhalten, kann beispielsweise ein wie vorstehend beschrieben ermittelter binärer Amplitudengang $|\tilde{G}_{\tau2}(f_{x'},f_{y'})|$ mittels morphologischer Operationen wie etwa einer Dilatation bearbeitet werden. Dadurch werden auch Ortsfrequenzen unterdrückt, die sich in unmittelbarer Nachbarschaft der ursprünglich als Moire-Störungen detektierten Ortsfrequenzen befinden. Somit werden zusätzlich auch kleinere Verschiebungen der Aliasingfrequenzen, die durch die geringfügig veränderte Aufnahmesituation, beispielsweise eine axiale Rotation um die Oberflächennormale der Anzeigevorrichtung 2, entstehen, mindestens teilweise kompensiert.

BEZUGSZEICHENLISTE

| | |
|---|---|
| 1 | Kamera |
| 1.1 | Kameraobjektiv, Abbildungsoptik |
| 1.2 | Sensorfläche |
| 1.3 | Sensorpixel |
| 2 | Anzeigevorrichtung |
| 2.1 | Anzeigepixel |
| 2.2 | Spalte |
| 2.3 | Zeile |
| 3 | Positioniereinheit |
| 3.1 | Motor |
| 3.2 | Halteplatte |
| 4 | Steuereinheit |
| 5 | Auswerteeinheit |

| | |
|---|---|
| $D_S$ | Sensorpixelpitch |
| $D_A$ | Anzeigepixelpitch |
| $f_{x'}$, $f_{y'}$ | horizontale, vertikale Ortsfrequenz |
| $\lvert G_{\tau2}(f_{x'},f_{y'})\rvert$ | Amplitudengang |
| $M_1$, $M_2$ | erste, zweite Störung |
| O | optische Achse |
| S | Startposition |
| V | Versatz |
| V' | Bildversatz |
| VP | Versatzpfad |
| VP' | Versatzpfadbild |
| $\lvert X_{\tau1}(f_{x'},f_{y'})\rvert$ | erster Betragsverlauf |
| $\lvert X_{\tau2}(f_{x'},f_{y'})\rvert$ | zweiter Betragsverlauf |

**Patentansprüche**

1. Verfahren zur Unterdrückung von Aliasingfehlern in einem aus mindestens einem Kamerabild gebildeten Moire-korrigierten Ergebnisbild, wobei mittels einer Kamera (1) umfassend eine Abbildungsoptik (1.1) und eine Sensorfläche (1.2) mit Sensorpixeln (1.3) das mindestens eine Kamerabild als Abbildung eines Anzeigebildes einer Anzeigevorrichtung (2) mit matrixartig angeordneten und in einem Anzeigepixelpitch ($D_A$) beabstandeten Anzeigepixeln (2.1) auf die Sensorfläche (1.2) aufgenommen wird, wobei die Kamera (1) und/oder die Sensorfläche (1.2) während der Aufnahme mindestens eines Kamerabildes relativ zur Anzeigevorrichtung (2) entlang mindestens eines Versatzpfades (VP) ausgehend von einer dem jeweiligen Kamerabild zugeordneten Startposition (S) bewegt wird, wobei ein erstes, ein zweites und mindestens ein drittes oder weiteres Kamerabild aufgenommen werden, **dadurch gekennzeichnet, dass**

   - das erste und das zweite Kamerabild als jeweils eine Abbildung von zueinander strukturgleichen Anzeigebildern dargestellt von derselben Anzeigevorrichtung (2) aufgenommen werden,
   - während der Aufnahme des ersten und des mindestens einen dritten oder weiteren Kamerabildes die Kamera (1) nicht oder nur geringfügig gegenüber der Anzeigevorrichtung (2) bewegt wird,
   - während der Aufnahme des zweiten Kamerabildes die Kamera (1) relativ zur Anzeigevorrichtung (2) entlang mindestens eines Versatzpfades (VP) bewegt wird,
   - für das erste und das zweite Kamerabild ein erster beziehungsweise ein zweiter Betragsverlauf ($\lvert X_{\tau1}(f_{x'},f_{y'})\rvert$, $\lvert X_{\tau2}(f_{x'},f_{y'})\rvert$) der jeweiligen Fouriertransformierten bestimmt werden,
   - aus dem ersten und dem zweiten Betragsverlauf ($\lvert X_{\tau1}(f_{x'},f_{y'})\rvert$, $\lvert X_{\tau2}(f_{x'},f_{y'})\rvert$) der Amplitudengang ($\lvert \tilde{G}_{\tau2}(f_{x'},f_{y'})\rvert$) eines Versatzfilters ermittelt wird,
   - für das mindestens eine dritte oder weitere Kamerabild jeweils die Fouriertransformierte bestimmt und jeweils mit dem Amplitudengang ($\lvert G_{\tau2}(f_{x'},f_{y'})\rvert$) des Versatzfilters multipliziert und daraus

- durch inverse Fouriertransformation jeweils ein Moire-korrigiertes Ergebnisbild bestimmt wird.

2. Verfahren nach Anspruch 1, **dadurch gekennzeichnet, dass** die Kamera (1) während der Aufnahme mindestens eines Kamerabildes relativ zur Anzeigevorrichtung (2) entlang mindestens eines Versatzpfades (VP) ausgehend von einer dem jeweiligen Kamerabild zugeordneten Startposition (S) bewegt wird.

3. Verfahren nach Anspruch 1 oder 2, **dadurch gekennzeichnet, dass** das erste und zweite Kamerabild von einer ersten Anzeigevorrichtung (2) aufgenommen werden und jedes weitere Kamerabild von jeweils einer weiteren Anzeigevorrichtung (2) aufgenommen wird, welche jeweils baugleich zur ersten Anzeigevorrichtung (2) ist und relativ zur Kamera (1) gleich angeordnet wird wie die erste Anzeigevorrichtung (2).

4. Verfahren nach einem der vorhergehenden Ansprüche, **dadurch gekennzeichnet, dass** ein binärer Amplituden-gang ($|\bar{G}_{\tau 2}(f_{x'},f_{y'})|$) aus dem Quotienten $|G_{\tau 2}(f_{x'},f_{y'})|$ des zweiten Betragsverlaufs ($|X_{\tau 2}(f_{x'},f_{y'})|$) bezogen auf den ersten Betragsverlauf (($|X_{\tau 1}(f_{x'},f_{y'})|$) dadurch ermittelt wird, dass dem binären Amplitudengang ($|\bar{G}_{\tau 2}(f_{x'},f_{y'})|$) der Wert 0 zugeordnet wird, wenn der Quotient $|G_{\tau 2}(f_{x'},f_{y'})|$ unterhalb eines vorbestimmten Schwellwerts liegt und dem binären Amplitudengang ($|\bar{G}_{\tau 2}(f_{x'},f_{y'})|$) der Wert 1 zugeordnet wird, wenn der Quotient $|G_{\tau 2}(f_{x'},f_{y'})|$ oberhalb eines vorbestimmten Schwellwerts liegt oder gleich dem vorbestimmten Schwellwert ist.

5. Verfahren nach einem der vorhergehenden Ansprüche, **dadurch gekennzeichnet, dass** der entlang eines Versatzpfades (VP) vorgenommene zur Sensorfläche (1.2) parallele Versatz (V) höchstens das Fünffache des Anzeigepixelpitches ($D_A$) beträgt.

6. Verfahren nach einem der vorhergehenden Ansprüche, **dadurch gekennzeichnet, dass** in einem Teach-In Schritt eine Versatzamplitude passend zu einer Anzeigevorrichtung (2) und einer Kamera (1) derart ermittelt wird, dass ein Moire-Störungsmaß unterhalb eines vorbestimmten Moire-Schwellwertes liegt und/oder minimiert wird, wenn die Kamera (1) während der Aufnahme des mindestens einen Kamerabildes um einen Versatzpfad (VP) mit einem Versatz (V) bewegt wird, der kleiner oder gleich der Versatzamplitude ist.

7. Verfahren nach einem der vorhergehenden Ansprüche, **dadurch gekennzeichnet, dass** in einem Teach-In Schritt mindestens ein Versatzpfad (VP) passend zu einer Anzeigevorrichtung (2) und einer Kamera (1) derart ermittelt wird, dass ein Moire-Störungsmaß unterhalb eines vorbestimmten Moire-Schwellwertes liegt und/oder minimiert wird, wenn die Kamera (1) während der Aufnahme mindestens eines Kamerabildes entlang dieses Versatzpfades (VP) relativ zur Startposition (S) bewegt wird.

8. Verfahren nach einem der vorhergehenden Ansprüche, **dadurch gekennzeichnet, dass** für mindestens ein Kamerabild die Kamera (1) senkrecht zur Anzeigevorrichtung (2) versetzt wird.

9. Verfahren nach einem der vorhergehenden Ansprüche, **dadurch gekennzeichnet, dass** mindestens ein Kamerabild mindestens entlang eines ersten und eines dazu symmetrisch angeordneten zweiten Versatzpfads (VP) relativ zu einem Anzeigebild bewegt wird.

10. Verfahren nach einem der vorhergehenden Ansprüche, **dadurch gekennzeichnet, dass** für eine Mehrzahl von Farbkanälen jeweils ein farbkanalbezogenes Ergebnisbild bestimmt wird, indem zwischen der Anzeigevorrichtung (2) und der Sensorfläche (1.2) der Kamera (1) ein Farbfilter angeordnet wird, wobei für jeden Farbkanal ein farbkanalbezogenes Versatzintervall bestimmt wird und wobei die farbkanalbezogenen Ergebnisbilder gegeneinander registriert werden.

11. Verfahren zur Bewertung der Darstellungsgüte einer pixelbasierten Anzeigevorrichtung (2), **dadurch gekennzeichnet, dass** nach einem der vorhergehenden Verfahren aus mindestens einem mit einer Kamera (1) aufgenommenen Kamerabild ein Moire-korrigiertes Ergebnisbild gebildet wird und die Darstellungsgüte anhand des Moire-korrigierten Ergebnisbildes bewertet wird.

12. Verfahren nach Anspruch 11, **dadurch gekennzeichnet, dass** defekte Anzeigepixel (2.1) der Anzeigevorrichtung (2) detektiert und/oder lokalisiert werden.

13. Verfahren nach einem der Ansprüche 11 oder 12, **dadurch gekennzeichnet, dass** die örtliche Verteilung einer photometrischen Kenngröße, vorzugsweise der Leuchtdichte, über der Anzeigevorrichtung (2) ermittelt wird.

**14.** Vorrichtung zur Durchführung eines Verfahrens nach einem der vorhergehenden Ansprüche, umfassend eine Kamera (1), eine Positioniereinheit (3), eine Steuereinheit (4) und eine Auswerteeinheit (5), wobei die Positioniereinheit (3) zur Bewegung der Kamera (1) um einen innerhalb des Versatzintervalls liegenden Versatz (V) eingerichtet ist und wobei die Steuereinheit (4) zur Auslösung der Aufnahme eines Kamerabildes eingerichtet ist und wobei die Auswerteeinheit (5) zur Bildung eines Moire-korrigierten Ergebnisbildes aus mindestens einem Kamerabild nach einem Verfahren nach einem der Ansprüche 1 bis 11 eingerichtet ist.

**15.** Vorrichtung nach Anspruch 14, **dadurch gekennzeichnet, dass** die Steuereinheit (4) zur Ansteuerung der Positioniereinheit (3) und zu einer auf die Bewegung der Positioniereinheit (3) abgestimmten Auslösung der Aufnahme eines Kamerabildes eingerichtet ist.

**16.** Vorrichtung nach Anspruch 14 oder 15, **dadurch gekennzeichnet, dass** die Steuereinheit (4) und die Auswerteeinheit (5) jeweils als ein Teil einer Steuer- und Auswerteeinheit ausgebildet sind.

**17.** Vorrichtung nach einem der Ansprüche 14 bis 16, **dadurch gekennzeichnet, dass** die Positioniereinheit (3) als Vibrationseinheit ausgebildet und an einem Gehäuse der Kamera (1) angeordnet ist.

**18.** Vorrichtung nach einem der Ansprüche 14 bis 17, **dadurch gekennzeichnet, dass** die Kamera (1) als Leuchtdichtemesskamera ausgebildet ist.

**Claims**

**1.** Method for suppressing aliasing errors in a Moire-corrected result image formed from at least one camera image, wherein by means of a camera (1) comprising an imaging optical unit (1.1) and a sensor surface (1.2) with sensor pixels (1.3) the at least one camera image is recorded as imaging of a display image of a display device (2) with display pixels (2.1) arranged in a matrix-like manner and spaced apart in a display pixel pitch ($D_A$) onto the sensor surface (1.2), wherein during the recording of at least one camera image the camera (1) and/or the sensor surface (1.2) are/is moved relative to the display device (2) along at least one offset path (VP) proceeding from a start position (S) assigned to the respective camera image, wherein a first, a second and at least one third or further camera image are recorded, **characterized in that**

- the first and the second camera image are recorded as in each case an imaging of mutually structurally identical display images represented by the same display device (2),
- during the recording of the first and the at least one third or further camera image, the camera (1) is not moved or is only slightly moved in relation to the display device (2),
- during the recording of the second camera image, the camera (1) is moved relative to the display device (2) along at least one offset path (VP),
- a first and respectively a second magnitude profile ($|X_{\tau 1}(f_{x'},f_{y'})|$, $|X_{\tau 2}(f_{x'},f_{y'})|$) of the respective Fourier transforms are determined for the first and the second camera image,
- the amplitude response ($|G_{\tau 2}(f_{x'},f_{y'})|$) of an offset filter is ascertained from the first and the second magnitude profile ($|X_{\tau 1}(f_{x'},f_{y'})|$, $|X_{\tau 2}(f_{x'},f_{y'})|$),
- for the at least one third or further camera image, the Fourier transform is in each case determined and is in each case multiplied by the amplitude response ($|G_{\tau 2}(f_{x'},f_{y'})|$) of the offset filter and, from this,
- a Moire-corrected result image is in each case determined by inverse Fourier transformation.

**2.** Method according to Claim 1, **characterized in that** during the recording of at least one camera image the camera (1) is moved relative to the display device (2) along at least one offset path (VP) proceeding from a start position (S) assigned to the respective camera image.

**3.** Method according to Claim 1 or 2, **characterized in that** the first and second camera images are recorded by a first display device (2) and each further camera image is recorded by a respective further display device (2), which is in each case structurally identical to the first display device (2) and is arranged relative to the camera (1) in the same way as the first display device (2).

**4.** Method according to any of the preceding claims, **characterized in that** a binary amplitude response ($|\tilde{G}_{\tau 2}(f_{x'},f_{y'})|$) is ascertained from the quotient $|G_{\tau 2}(f_{x'},f_{y'})|$ of the second magnitude profile ($|X_{\tau 2}(f_{x'},f_{y'})|$) in relation to the first magnitude profile (($|X_{\tau 1}(f_{x'},f_{y'})|$) by the binary amplitude response ($|\tilde{G}_{\tau 2}(f_{x'},f_{y'})|$) being assigned the value 0 if the quotient $|G_{\tau 2}$

**EP 4 183 129 B1**

$(f_{x'},f_{y'})|$ is below a predetermined threshold value and the binary amplitude response ($|\tilde{G}_{\tau 2}(f_{x'},f_{y'})|$) being assigned the value 1 if the quotient $|G_{\tau 2}(f_{x'},f_{y'})|$ is above a predetermined threshold value or is equal to the predetermined threshold value.

5. Method according to any of the preceding claims, **characterized in that** the offset (V) that is effected along an offset path (VP) and is parallel to the sensor surface (1.2) is at most five times the display pixel pitch ($D_A$).

6. Method according to any of the preceding claims, **characterized in that** in a teach-in step an offset amplitude appropriate for a display device (2) and a camera (1) is ascertained such that a Moire interference measure is below a predetermined Moire threshold value and/or is minimized if, during the recording of the at least one camera image, the camera (1) is moved around an offset path (VP) with an offset (V) that is less than or equal to the offset amplitude.

7. Method according to any of the preceding claims, **characterized in that** in a teach-in step at least one offset path (VP) appropriate for a display device (2) and a camera (1) is ascertained such that a Moire interference measure is below a predetermined Moire threshold value and/or is minimized if, during the recording of at least one camera image, the camera (1) is moved along this offset path (VP) relative to the start position (S).

8. Method according to any of the preceding claims, **characterized in that** for at least one camera image the camera (1) is offset perpendicularly to the display device (2).

9. Method according to any of the preceding claims, **characterized in that** at least one camera image is moved relative to a display image at least along a first offset path and a second offset path (VP) arranged symmetrically with respect thereto.

10. Method according to any of the preceding claims, **characterized in that** a colour channel-related result image is in each case determined for a plurality of colour channels by a colour filter being arranged between the display device (2) and the sensor surface (1.2) of the camera (1), wherein a colour channel-related offset interval is determined for each colour channel and wherein the colour channel-related result images are registered with respect to one other.

11. Method for assessing the representation quality of a pixel-based display device (2), **characterized in that**, according to one of the preceding methods, a Moire-corrected result image is formed from at least one camera image recorded by a camera (1) and the representation quality is assessed on the basis of the Moire-corrected result image.

12. Method according to Claim 11, **characterized in that** defective display pixels (2.1) of the display device (2) are detected and/or localized.

13. Method according to either of Claims 11 and 12, **characterized in that** the local distribution of a photometric characteristic variable, preferably of the luminance, over the display device (2) is ascertained.

14. Device for carrying out a method according to any of the preceding claims, comprising a camera (1), a positioning unit (3), a control unit (4) and an evaluation unit (5), wherein the positioning unit (3) is configured to move the camera (1) by an offset (V) lying within the offset interval and wherein the control unit (4) is configured to trigger the recording of a camera image and wherein the evaluation unit (5) is configured to form a Moire-corrected result image from at least one camera image according to a method according to any of Claims 1 to 11.

15. Device according to Claim 14, **characterized in that** the control unit (4) is configured to control the positioning unit (3) and to trigger the recording of a camera image in a manner coordinated with the movement of the positioning unit (3).

16. Device according to Claim 14 or 15, **characterized in that** the control unit (4) and the evaluation unit (5) are each designed as a part of a control and evaluation unit.

17. Device according to any of Claims 14 to 16, **characterized in that** the positioning unit (3) is designed as a vibration unit and is arranged on a housing of the camera (1).

18. Device according to any of Claims 14 to 17, **characterized in that** the camera (1) is designed as a luminance measuring camera.

**Revendications**

1. Procédé pour la réduction des erreurs de crénelage dans une image finale corrigée du moirage formée par au moins une image de caméra, dans lequel, au moyen d'une caméra (1) comprenant une optique d'imagerie (1.1) et une surface de capteur (1.2) dotée de pixels de capteur (1.3), ladite au moins une image de caméra est capturée sur la surface de capteur (1.2) en tant que représentation d'une image d'affichage d'un dispositif d'affichage (2) avec des pixels d'affichage (2.1) disposés de manière matricielle et espacés selon un pas de pixel d'affichage ($D_A$), la caméra (1) et/ou la surface de capteur (1.2) étant déplacées pendant la capture d'au moins une image de caméra par rapport au dispositif d'affichage (2) le long d'au moins une trajectoire de décalage (VP) à partir d'une position de départ (S) attribuée à l'image de caméra respective, une première, une deuxième et au moins une troisième ou d'autres images de caméra étant capturées, **caractérisé en ce que**

   - la première et la deuxième image de caméra sont capturées en tant que représentations d'images d'affichage structurellement identiques les unes aux autres présentées par le même dispositif d'affichage (2),
   - pendant la capture de la première et de ladite au moins une troisième ou d'autres images de caméra, la caméra (1) est déplacée de manière nulle ou seulement minime par rapport au dispositif d'affichage (2),
   - pendant la capture de la deuxième image de caméra, la caméra (1) est déplacée par rapport au dispositif d'affichage (2) le long d'au moins une trajectoire de décalage (VP),
   - pour la première et la deuxième image de caméra, un premier et un deuxième profil d'amplitude ($|X_{\tau1}(f_{x'},f_{y'})|$, $|X_{\tau2}(f_{x'},f_{y'})|$), respectivement, de la transformée de Fourier respective sont déterminés,
   - à partir du premier et du deuxième profil d'amplitude ($|X_{\tau1}(f_{x'},f_{y'})|$, $|X_{\tau2}(f_{x'},f_{y'})|$), la réponse en amplitude ($|G_{\tau2}(f_{x'},f_{y'})|$) d'un filtre de décalage est déterminée,
   - pour ladite au moins une troisième ou d'autres images de caméra, la transformée de Fourier est respectivement déterminée et multipliée par la réponse en amplitude ($|G_{\tau2}(f_{x'},f_{y'})|$) du filtre de décalage et à partir de cela
   - une image finale corrigée du moirage est respectivement déterminée par une transformée de Fourier inverse.

2. Procédé selon la revendication 1, **caractérisé en ce que** la caméra (1) est déplacée, pendant la capture d'au moins une image de caméra, par rapport au dispositif d'affichage (2) le long d'au moins une trajectoire de décalage (VP) à partir d'une position de départ (S) attribuée à l'image de caméra respective.

3. Procédé selon la revendication 1 ou 2, **caractérisé en ce que** la première et la deuxième image de caméra sont capturées à partir d'un premier dispositif d'affichage (2) et **en ce que** chaque image de caméra supplémentaire est capturée à partir d'un dispositif d'affichage (2) supplémentaire respectif, dont chacun est de construction identique au premier dispositif d'affichage (2) et est disposé, par rapport à la caméra (1), de la même manière que le premier dispositif d'affichage (2).

4. Procédé selon l'une des revendications précédentes, **caractérisé en ce qu'**une réponse en amplitude binaire ($|\tilde{G}_{\tau2}(f_{x'},f_{y'})|$) est déterminée à partir du quotient $|G_{\tau2}(f_{x'},f_{y'})|$ du deuxième profil d'amplitude ($|X_{\tau2}(f_{x'},f_{y'})|$) par rapport au premier profil d'amplitude (($|X_{\tau1}(f_{x'},f_{y'})|$) en attribuant la valeur 0 à la réponse en amplitude binaire ($|\tilde{G}_{\tau2}(f_{x'},f_{y'})|$) lorsque le quotient $|G_{\tau2}(f_{x'},f_{y'})|$ est inférieur à une valeur seuil prédéterminée, et en attribuant la valeur 1 à la réponse en amplitude binaire ($|\tilde{G}_{\tau2}(f_{x'},f_{y'})|$) lorsque le quotient $|G_{\tau2}(f_{x'},f_{y'})|$ est supérieur ou égal à la valeur seuil prédéterminée.

5. Procédé selon l'une des revendications précédentes, **caractérisé en ce que** le décalage (V) parallèle à la surface de capteur (1.2) effectué le long d'une trajectoire de décalage (VP) n'est pas supérieur à cinq fois le pas de pixel d'affichage ($D_A$).

6. Procédé selon l'une des revendications précédentes, **caractérisé en ce que**, dans une étape d'apprentissage, une amplitude de décalage est déterminée pour un dispositif d'affichage (2) et pour une caméra (1) de telle manière qu'une mesure de perturbation de moirage soit inférieure à une valeur seuil de moirage prédéterminée et/ou soit minimisée, lorsque la caméra (1) est déplacée, pendant la capture de ladite au moins une image de caméra, autour d'une trajectoire de décalage (VP) avec un décalage (V) qui est inférieur ou égal à l'amplitude de décalage.

7. Procédé selon l'une des revendications précédentes, **caractérisé en ce que**, dans une étape d'apprentissage, au moins une trajectoire de décalage (VP) est déterminée correspondant à un dispositif d'affichage (2) et à une caméra (1) de telle manière qu'une mesure de perturbation de moirage soit inférieure à une valeur seuil de moirage prédéterminée et/ou soit minimisée, lorsque la caméra (1) est déplacée, pendant la capture d'au moins une image de caméra, le long de cette trajectoire de décalage (VP) par rapport à la position de départ (S).

8. Procédé selon l'une des revendications précédentes, **caractérisé en ce que**, pour au moins une image de caméra, la caméra (1) est décalée perpendiculairement au dispositif d'affichage (2).

9. Procédé selon l'une des revendications précédentes, **caractérisé en ce qu'**au moins une image de caméra est déplacée, par rapport à une image d'affichage, au moins le long d'une première et d'une deuxième trajectoire de décalage (VP) disposée de manière symétrique par rapport à la première.

10. Procédé selon l'une des revendications précédentes, **caractérisé en ce que**, pour une pluralité de canaux de couleur, une image finale relative au canal de couleur est respectivement déterminée, en disposant un filtre de couleur entre le dispositif d'affichage (2) et la surface de capteur (1.2) de la caméra (1), un intervalle de décalage relatif au canal de couleur étant déterminé pour chaque canal de couleur et les images finales relatives au canal de couleur étant enregistrées les unes par rapport aux autres.

11. Procédé d'évaluation de la qualité de présentation d'un dispositif d'affichage à base de pixels (2), **caractérisé en ce que**, selon l'un des procédés précédents, une image finale corrigée du moirage est formée à partir d'au moins une image de caméra capturée par une caméra (1) et la qualité de présentation est évaluée à l'aide de l'image finale corrigée du moirage.

12. Procédé selon la revendication 11, **caractérisé en ce que** des pixels d'affichage (2.1) défectueux du dispositif d'affichage (2) sont détectés et/ou localisés.

13. Procédé selon l'une des revendications 11 ou 12, **caractérisé en ce que** la répartition locale d'une grandeur photométrique, de préférence la luminance, sur le dispositif d'affichage (2) est déterminée.

14. Dispositif de mise en œuvre d'un procédé selon l'une des revendications précédentes, comprenant une caméra (1), une unité de positionnement (3), une unité de commande (4) et une unité d'évaluation (5), l'unité de positionnement (3) étant configurée pour déplacer la caméra (1) selon un décalage (V) se situant dans l'intervalle de décalage, l'unité de commande (4) étant conçue pour déclencher la capture d'une image de caméra et l'unité d'évaluation (5) étant conçue pour former une image finale corrigée du moirage à partir d'au moins une image de caméra par un procédé selon l'une des revendications 1 à 11.

15. Dispositif selon la revendication 14, **caractérisé en ce que** l'unité de commande (4) est conçue pour commander l'unité de positionnement (3) et pour déclencher la capture d'une image de caméra de manière synchronisée avec le mouvement de l'unité de positionnement (3).

16. Dispositif selon la revendication 14 ou 15, **caractérisé en ce que** l'unité de commande (4) et l'unité d'évaluation (5) sont respectivement conçues en tant que partie d'une unité de commande et d'évaluation.

17. Dispositif selon l'une des revendications 14 à 16, **caractérisé en ce que** l'unité de positionnement (3) est conçue sous forme d'unité de vibration et est disposée sur un boîtier de la caméra (1).

18. Dispositif selon l'une des revendications 14 à 17, **caractérisé en ce que** la caméra (1) est conçue sous forme de caméra de mesure de luminance.

FIG 1

FIG 2A

FIG 2B

FIG 3A

FIG 3B

FIG 4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- JP 2008035241 A
- US 7705883 B2
- EP 2097783 A1
- JP 3755375 B
- US 6831995 B1
- JP 2014174803 A
- WO 2018146765 A1
- JP 2005072816 A
- EP 1860492 A1
- US 2020005437 A1